(19) Europäisches Patentamt
European Patent Office
Office européen des brevets

(11) EP 1 693 412 A1

(12) EUROPEAN PATENT APPLICATION
published in accordance with Art. 158(3) EPC

(43) Date of publication:
**23.08.2006 Bulletin 2006/34**

(21) Application number: **03778782.7**

(22) Date of filing: **10.12.2003**

(51) Int Cl.:
***C08L 25/06*** *(2006.01)* ***C08L 71/12*** *(2006.01)*
***C08K 5/5357*** *(2006.01)* ***C09K 21/12*** *(2006.01)*
*C07F 9/6574* *(2006.01)*

(86) International application number:
**PCT/JP2003/015799**

(87) International publication number:
**WO 2005/056671 (23.06.2005 Gazette 2005/25)**

(84) Designated Contracting States:
**AT BE BG CH CY CZ DE DK EE ES FI FR GB GR HU IE IT LI LU MC NL PT RO SE SI SK TR**

(71) Applicant: **Teijin Chemicals, Ltd.**
**Tokyo 100-0011 (JP)**

(72) Inventors:
- **YAMANAKA, Katsuhiro,**
  **c/o Teijin Chemicals Ltd.**
  **Tokyo 100-0011 (JP)**
- **IMAMURA, Koichi,**
  **c/o Teijin Chemicals Ltd.**
  **Tokyo 100-0011 (JP)**
- **TANABE, Seiichi,**
  **c/o Teijin Chemicals Ltd.**
  **Tokyo 100-0011 (JP)**
- **TAKETANI, Yutaka**
  **Osaka-shi, Osaka 538-0044 (JP)**

(74) Representative: **Hallybone, Huw George et al**
**Carpmaels and Ransford,**
**43-45 Bloomsbury Square**
**London WC1A 2RA (GB)**

# (54) FLAME-RETARDANT STYRENE RESIN COMPOSITION AND MOLDED ARTICLE OBTAINED THEREFROM

(57) It is an object of the present invention to provide a styrene type resin composition excellent in thermal stability, hue, fluidity, and heat resistance, and also having the flame retardant performance, and a molded product excellent in outward appearance, formed therefrom.

The present invention provides a flame retardant styrene type resin composition comprising (A) a styrene type resin (component A) in an amount of 100 parts by weight, (B) a polyphenylene ether type resin (component B) in an amount of 0 to 100 parts by weight, and (C) an organophosphorus compound (component C) represented by the following formula (1) in an amount of 1 to 100 parts by weight, **characterized in that** the organophosphorus compound (component C) satisfies:

(i) the weight loss residue on heating at 500°C is 10% or less;
(ii) the HPLC purity is 90% or more, and
(iii) the acid value is 0.5 mg KOH/g or less

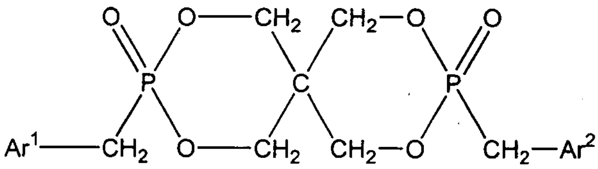

(1)

(where in the formula, $Ar^1$ and $Ar^2$ may be the same or different, and is a phenyl group which may have a substituent.)

EP 1 693 412 A1

Fig. 1

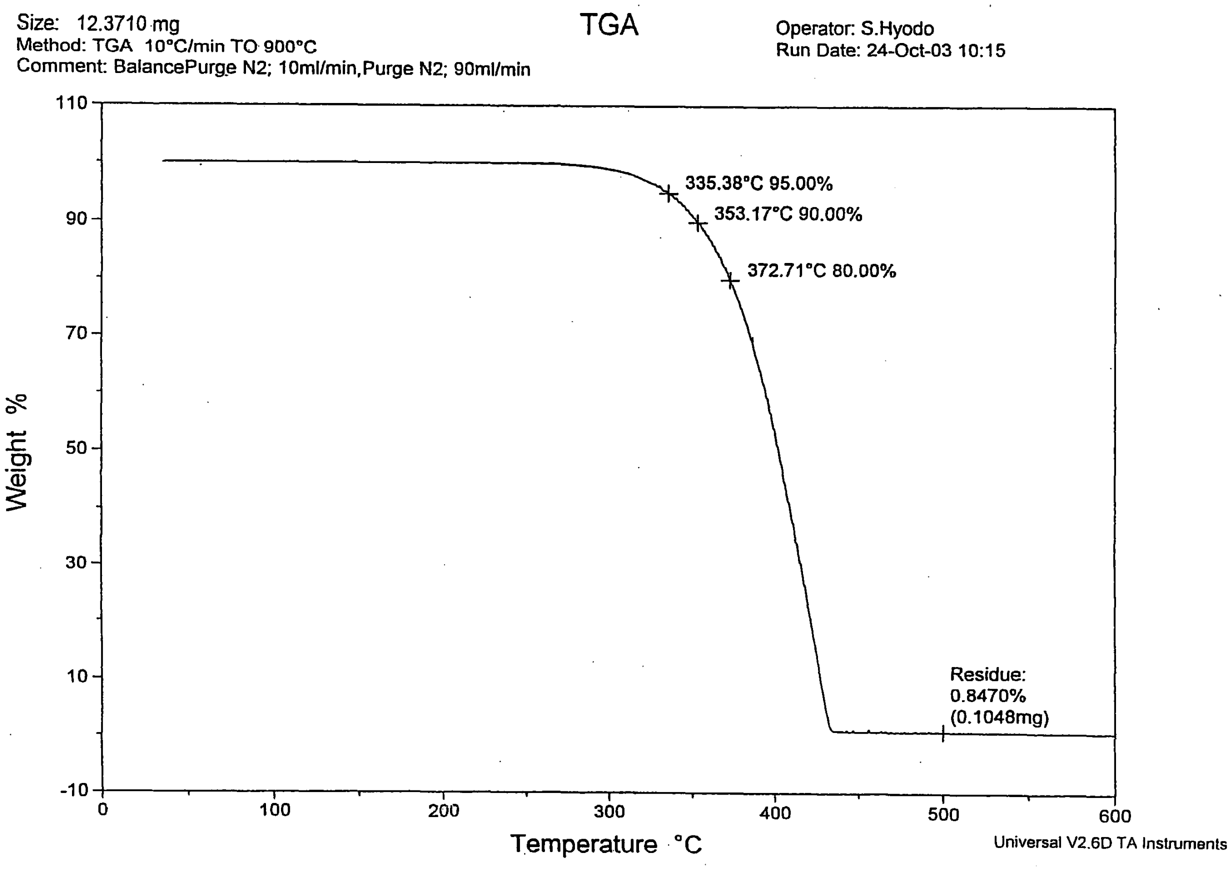
Size: 12.3710 mg
Method: TGA 10°C/min TO 900°C
Comment: BalancePurge N2; 10ml/min,Purge N2; 90ml/min
TGA
Operator: S.Hyodo
Run Date: 24-Oct-03 10:15
335.38°C 95.00%
353.17°C 90.00%
372.71°C 80.00%
Residue:
0.8470%
(0.1048mg)
Weight %
110
90
70
50
30
10
-10
0
100
200
300
400
500
600
Temperature °C
Universal V2.6D TA Instruments

## Description

DETAILED DESCRIPTION OF THE INVENTION

Technical Field to which the Invention Belongs

The present invention relates to a flame retardant styrene type resin composition having all of flame-retardancy, thermal stability, hue, fluidity, and heat resistance, and a molded product excellent in outward appearance, formed therefrom. More particularly, it relates to a flame retardant styrene type resin composition which contains a pentaerythritol diphosphonate compound having a specific characteristic, and is substantially halogen-free, and a molded product therefrom.

Prior Art

A styrene type resin is excellent in impact resistance, and further, it is also excellent in moldability. For this reason, it is used in a wide range of fields of office automation equipment components, home appliance components, automobile components, and the like. However, the use is restricted due to the flammability of the styrene type resin. Particularly, in recent years, in order to enhance the safety, the molded products of the office automation equipment or the home appliances have been required to have higher flame retardancy as the restriction by the test for flammability based on subject 94 of Underwriters Laboratory (UL) Inc., which is the American standard, has become more strict year by year.

As a method for imparting the flame retardancy to a flammable resin such as a styrene type resin, conventionally, a halogen type flame retarder has been used. It is generally known that the halogen type flame retarder attains high flame retardancy by being used in combination with antimony oxide, and it has been often used. However, in recent years, studies on a non-halogen type flame retarder have been increasingly conducted from the environmental problems such as the poisonous gas formation during burning.

As such methods, there have been reported a large number of methods for adding a phosphorus type flame retarder to a mixture of a styrene type resin and a polyphenylene ether type resin. Such methods are each a method in which to a styrene type resin, a polyphenylene ether type resin is added, thereby to improve the thermal stability, and the flame retardancy is achieved by a phosphorus type flame retarder. The methods are disclosed in JP-A-54-38348, JP-A-5-287119, JP-A-5-339417, JP-A-7-316383, JP-A-9-132693, JP-A-9-151315, and the like.

However, all of the resin compositions of the foregoing publications are remarkably reduced in heat resistance as compared with prior to the addition of a flame retarder. Thus, the improvement of the heat resistance which is one of the characteristics of addition of the polyphenylene ether type resin cannot be taken advantage of. Therefore, the practical utilization thereof has not been attained. This results from the plasticity of the phosphorus type flame retarders used in the resin compositions of the publications, and this is because an aromatic type phosphoric acid ester monomer, or an aromatic type phosphoric acid ester condensation product is used. Accordingly, this has been considered unavoidable so long as a phosphorus type flame retarder is used.

In U.S. Pat. No. 4,162,278, a two-component type resin composition obtained by adding a pentaerythritol diphosphonate compound to a high impact polystyrene, and a three-component type resin composition obtained by further adding polyphenylene ether thereto are disclosed, the former as Comparative Example, and the latter as Example. However, in this patent, the purity and the acid value of the pentaerythritol diphosphonate compound, and the reduced viscosity and the rubber component content of the high impact polystyrene are supposed to be not proper. Thus, in either case, a practically usable flame retardant composition is not obtained. Namely, in Comparative Examples of the patent, there are described examples in which to a high impact polystyrene, various pentaerythritol diphosphonate compounds are added in an amount of 8% by weight. In Examples thereof, polyphenylene ether is further added in order to improve the flame retardancy. However, the composition has been yet insufficient in terms of the flame retardancy due to the defects of the pentaerythritol diphosphonate compound, and cannot withstand practical use.

Under the foregoing circumstances, in the patent, there is also no description at all on the weight loss residue on heating, the purity, and the acid value of the pentaerythritol diphosphonate type compound which affect the thermal stability, the hue, and the outward appearance of the resin composition serving as practically important items.

In WO 01/57134, there is described an invention in which to a resin component mainly containing a high impact polystyrene, pentaerythritol diphosphite or diphosphonate is added. As the example using diphosphonate, mention may be made of HIPS /diphosphonate composition as an example, which attains the flame retardancy V-2, but has been yet insufficient in terms of outward appearance and thermal stability of the molded product serving as practically important items.

In WO00/17268 (JP-T-2002-526585 (the term "JP-T" as used herein means a published Japanese translation of a PCT patent application)), there is described a flame retardant resin composition obtained by adding, to an ABS

resin, P,P'-dihydrocarbyl pentaerythritol diphosphonate different from that of the invention, in which the total number of carbons in the two hydrocarbyl substituents is 8 or less, and hence the two substituents cannot contain aromatic rings at the same time. As diphosphonate, specifically, dimethyl pentaerythritol diphosphonate which serves as the raw material for chemical weapons, and hence of which the industrial use is prohibited, is used. When it is added in an amount of 25% by weight to an ABS resin, the flame retardancy V-0 is attained. However, it is apparent that the composition is not practical. Further, there is also no description on the weight loss residue on heating, the purity, and the acid value of the pentaerythritol diphosphonate compound which affect the outward appearance, the thermal stability, and the hue of the molded product serving as practically important items.

In WO 02/92690, there is described a resin composition excellent in flame retardancy obtained by adding pentaerythritol diphosphonate with an acid value of 0.7 mg KOH/g or less to a resin component mainly containing an aromatic polyester resin.

As far as the present inventors know, in achieving the flame retardancy due to a conventional styrene type resin being halogen-free, it has been very difficult to attain an effective flame retardancy level with the use of a phosphorus compound alone, and to attain practical various physical properties. This presents a large number of problems in practical utilization. In order to attain a practically effective flame retardancy level by using a phosphorus compound, a large amount of a phosphorus compound is required to be used. Further, a conventional phosphorus compound is a low boiling point compound. Thus, with the resin which undergoes extrusion and molding at a relatively high temperature, problems such as gas generation upon extrusion, and mold staining during molding occurred. Whereas, it is generally known that when a general phosphorus compound is added to a styrene type resin, the heat resistance is extremely reduced to impair the features inherent in the styrene type resin.

Problems that the Invention is to Solve

It is an object of the present invention to provide a styrene type resin composition excellent in thermal stability, hue, fluidity, and heat resistance, and also having flame retardant performance, and a molded product excellent in outward appearance, formed therefrom.

A first object of the invention is to provide a styrene type resin composition having all of industrially useful thermal stability, hue, fluidity, heat resistance, and the like in a balanced manner while keeping the flame retardancy, and a molded product which is free from silver and excellent in outward appearance, formed therefrom.

A second object of the invention is to provide a styrene type resin composition substantially not containing halogen, and capable of attaining high flame retardancy of V-2 level or more of the UL94 standard, and V-0 level or more under suitable conditions, and a molded product therefrom.

A third object of the invention is to provide a flame retardant styrene type resin composition advantageously usable for office automation equipment components, home appliance components, electrical / electronic components, automobile components, and the like, and molded products therefrom.

Means for Solving the Problems

According to the study by the present inventors, the objects of the present invention are attained by a flame retardant styrene type resin composition which comprises (A) a styrene type resin (component A) in an amount of 100 parts by weight, (B) a polyphenylene ether type resin (component B) in an amount of 0 to 100 parts by weight, and (C) an organophosphorus compound (component C) represented by the following formula (1) in an amount of 1 to 100 parts by weight, characterized in that the organophosphorus compound (component C) satisfies:

(i) the weight loss residue on heating at 500°C is 10% or less;
(ii) the HPLC purity is 90% or more, and
(iii) the acid value is 0.5 mg KOH/g or less

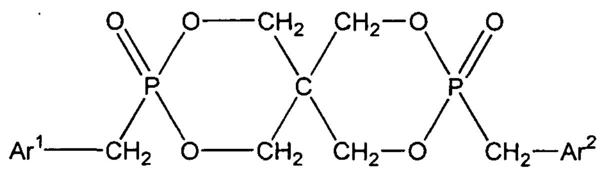

(1)

(where in the formula, $Ar^1$ and $Ar^2$ may be the same or different, and is a phenyl group which may have a substituent.)

Below, the flame retardant styrene type resin composition of the invention will be described in details.

The styrene type resins each to be used as a component A of the invention are homopolymers or copolymers of aromatic vinyl monomers such as styrene, $\alpha$-methylstyrene, and vinyl toluene, copolymers of these monomers and vinyl monomers such as acrylonitrile and methyl methacrylate, and the ones obtained by graft polymerizing diene type rubbers such as polybutadiene, ethylene / propylene type rubbers, acrylic type rubbers, or the like with styrene and/or styrene derivatives, or styrene and/or styrene derivatives and other vinyl monomers. Specific examples of the styrene type resin may include resins such as polystyrene, high impact polystyrene (HIPS), acrylonitrile / styrene copolymer (AS resin), acrylonitrile / butadiene / styrene copolymer (ABS resin), methyl methacrylate / butadiene / styrene copolymer (MBS resin), methyl methacrylate / acrylonitrile / butadiene / styrene copolymer (MABS resin), acrylonitrile / acrylic rubber / styrene copolymer (AAS resin), acrylonitrile / ethylene propylene type rubber / styrene copolymer (AES resin), or mixtures thereof. From the viewpoint of the impact resistance, rubber-modified styrene type resins are preferred. The rubber-modified styrene type resin denotes a polymer in which in a matrix including a vinyl aromatic type polymer, a rubber like polymer is dispersed in the form of particles. It is obtained in the following manner. An aromatic vinyl monomer, or a monomer mixture obtained by adding a vinyl monomer, if required, is subjected to known block polymerization, block suspension polymerization, solution polymerization, or emulsion polymerization in the presence of a rubber like polymer.

Examples of the rubber like polymer may include diene type rubbers such as polybutadiene, poly(styrene - butadiene), poly(acrylonitrile - butadiene) and saturated rubbers obtained by hydrogenating the diene rubbers, isoprene rubber, chloroprene rubber, acrylic type rubbers such as butyl polyacrylate, and ethylene- propylene- diene monomer terpolymer (EPDM). Particularly, diene type rubbers are preferred.

Examples of the aromatic vinyl monomer which is an essential component in the graft copolymerizable monomer mixture to be polymerized in the presence of the rubber like polymer may include styrene, $\alpha$-methylstyrene, paramethylstyrene. Styrene is most preferred.

As vinyl monomers which can be added, if required, mention may be made of acrylonitrile, methyl methacrylate, and the like.

The rubber like polymer in the rubber-modified styrene type resin is in an amount of 1 to 50% by weight, and preferably 2 to 40% by weight. The graft polymerizable monomer mixture is in an amount of 99 to 50% by weight, and preferably 98 to 60% by weight. Within this range, the objective resin composition is improved in balance between the impact resistance and the rigidity, and it is favorable in thermal stability.

The reduced viscosity $\eta sp/C$ (0.5 g/dl, toluene solution, measured at 30°C) which is the scale for the molecular weight of the styrene type resin in the invention is 0.2 to 1.5 dl/g, and preferably 0.3 to 1.4 dl/g. As means for satisfying the foregoing conditions on the reduced viscosity $\eta sp/C$ of the rubber-modified styrene type resin, mention may be made of the adjustments of the polymerization initiator content, the polymerization temperature, and the chain transfer agent content, and the like. When the reduced viscosity is low, the heat resistance and the impact resistance are also low.

The styrene type resin for use in the invention is preferably high impact polystyrene (HIPS). The impact value of HIPS preferably falls within the range of 20 J/m to 300 J/m in terms of Izod impact strength (notched) measured by the JIS K 6871 test.

The flame retardancy of the resin composition comprising (A) a styrene type resin (component A) and (C) an organophosphorus compound (component C) out of the resin compositions of the invention tends to be affected by the rubber like polymer content of the component A and the reduced viscosity of the component A. The rubber like polymer content of the component A for obtaining the stable flame retardancy in the composition is 1 to 6%, and preferably 1 to 5.5%. The reduced viscosity of the component A for obtaining the stable flame retardancy in the composition is 0.2 to 0.9 dl/g, and preferably 0.3 to 0.8 dl/g.

The polyphenylene ether type resin (which is hereinafter abbreviated to as PPE) to be used as the component B in the invention is a homopolymer and/or a copolymer including the bonding unit represented by the following formula (3).

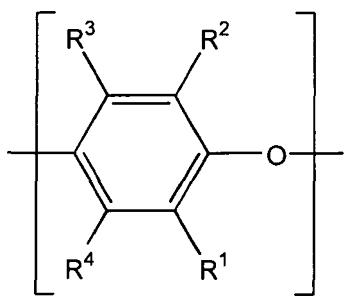

(3)

(where $R^1$ to $R^4$ may be the same or different, and each represent a hydrogen atom or a given hydrocarbon group.)

Specific examples of such PPE may include homopolymers such as (2,6-dimethyl-1,4-phenylene) ether, (2,6-diethyl-1,4-phenylene) ether, (2,6-dipropyl-1,4-phenylene) ether, (2-methyl-6-ethyl-1,4-phenylene) ether, (2-methyl-6-propyl-1,4-phenylene) ether, (2,3,6-trimethyl-1,4-phenylene) ether, and/or copolymers thereof, and particularly preferably may include poly(2,6-dimethyl-1,4-phenylene) ether. Whereas, examples may include a copolymer obtained by graft polymerizing a styrene compound to the PPE. The method for producing such PPE has no particular restriction. It can be produced with ease, for example, by oxidizing and polymerizing 2,6-xylenol using a complex of cuprous salt and amines as a catalyst according to the method described in U.S. Pat. No. 3,306,874.

The reduced viscosity ηsp/C (0.5 g/dl, toluene solution, measured at 30°C) which is the scale for the molecular weight of the PPE resin for use in the invention is 0.2 to 0.7 dl/g, and preferably 0.3 to 0.6 dl/g. A PPE resin with a reduced viscosity within this range has well balanced molding processability and mechanical physical properties. By adjusting the amount of the catalyst, and the like during PPE production, it is possible to adjust the reduced viscosity with ease.

The amount of the component B is 0 to 100 parts by weight, preferably 0 to 80 parts by weight, more preferably 0 to 70 parts by weight, and in particular preferably 0 to 50 parts by weight per 100 parts by weight of the component A.

Whereas, use of PPE in combination with the phosphonate compound (component C) described later can improve the flame retardancy level as compared with use thereof alone, and preferably can attain the flame retardancy level V-0. In this case, the amount of the component B is 1 to 100 parts by weight, preferably 3 to 50 parts by weight, and in particular preferably 5 to 50 parts by weight per 100 parts by weight of the component A.

When the amount of the component B to be added exceeds 100 parts by weight, the resin is inferior in fluidity, and weather resistance, and also disadvantageous in cost. It is generally known that the PPE resin is low in fluidity, and has an active hydrogen at the α position, and is inferior in weather resistance. Therefore, the amount of the component B to be added is preferably minimized.

In the invention, the organophosphorus compound to be used as the component C is a pentaerythritol diphosphonate compound represented by the following formula (1) satisfying the characteristics of the following items (i) to (iii):

(i) the weight loss residue on heating at 500°C is 10% or less;
(ii) the HPLC purity is 90% or more, and
(iii) the acid value is 0.5 mg KOH/g or less

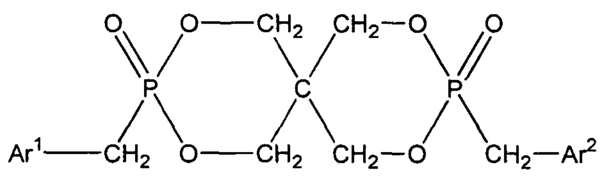

(1)

(where in the formula, $Ar^1$ and $Ar^2$ may be the same or different, and is a phenyl which may have a substituent.)

By using the organophosphorus compound of the formula (1) satisfying the characteristics of the items (i) to (iii), it is possible to obtain a resin composition excellent in thermal stability, hue, outward appearance, flame retardancy, and the like.

The weight loss residue on heating at 500°C of the organophosphorus compound to be used as the component C refers to the weight loss residue on heating defined as the residual amount (%) at 500°C upon carrying out a measurement at a heating rate of 10°C/min under a nitrogen flow by the thermal gravimetric balance test (TGA method). The weight loss residue on heating at 500°C of the organophosphorus compound (component C) is 10% or less, preferably 8% or less, more preferably 5% or less, further preferably 3% or less, and in particular preferably 1% or less. The one with a large amount of weight loss residue on heating at 500°C indicates the one containing a large amount of impurities. The impurities adversely affect the thermal stability, the hue, the outward appearance, the flame retardancy, and the like of the resin composition of the invention.

The organophosphorus compound of the component C has a HPLC purity of 90% or more, preferably 95% or more, and in particular preferably 97% or more. The one with such a high purity is excellent in flame retardancy, hue, and thermal stability, and hence it is preferred. The one with a HPLC purity of less than 90% is adversely affected in flame retardancy, hue, and thermal stability by the impurities contained therein, so that the mold staining of a molding machine, and defective outward appearance (silver) of a molded product occur.

Herein, for the measurement of the HPLC purity of the component C, the following method is used.

For the column, Develosil ODS-7 300 mm x 4 mm in dia., manufactured by Nomura Chemical Co., Ltd., was

used, and the column temperature was set at 40°C. For the solvent, a mixed solution of acetonitrile and water in a ratio of 6.5 : 3.5 (by volume) was used, and injected in an amount of 5 μl. For the detector, UV-260 nm was used.

For the organophosphorus compound of the component C, the one with an acid value of 0.5 mg KOH/g or less, preferably 0.4 mg KOH/g or less, more preferably 0.3 mg KOH/g or less, further preferably 0.2 mg KOH/g or less, and in particular preferably 0.1 mg KOH/g or less is used. By using the component C with an acid value within this range, it is possible to obtain a molded product excellent in hue, outward appearance, and flame retardancy, and it is possible to obtain a molded product good in thermal stability. An organophosphorus compound of the component C with an acid value of more than 0.5 mg KOH/g unfavorably causes the mold staining of a molding machine, rust of an extruder, and the like. Whereas, a high acid value causes the decomposition of the organophosphorus compound itself. The decomposed products of the organophosphorus compound causes the defective outward appearance of the molded product, so that silver occurs. Further, the resin composition of the invention is also used for electrical / electronic equipment applications. Therefore, it is also conceivable that the acid component adversely affects the electrical / electronic equipment. Herein, the acid value denotes the amount (mg) of KOH necessary for neutralizing the acid component in 1 g of the sample (component C), and it can be measured by the method specified in JIS-K-3504.

The resin composition of the invention has a HDT retention of 85% or more with reference to the base resin. Such a retention range cannot be a large defect practically, and the resin composition is characterized by retaining high heat resistance inherent in the base resin. The preferred range of the HDT retention is 90% or more, and more preferably 95% or more.

In the invention, other than the organophosphorus compound of the component C, a phosphorus compound other than the component C, a fluorine-containing resin or other additives may be added. These additives may be naturally added for the reduction of the ratio of the organophosphorus compound, which is the component C, to be used, the improvement of the flame retardancy of the molded product, improvement of the physical properties of the molded product, the improvement of the chemical properties of the molded product, or other purposes. Other components to be added will be specifically described later.

Preferred example of the phosphorus type compound to be used as the component C in the invention is an organophosphorus compound represented by the following formula (2):

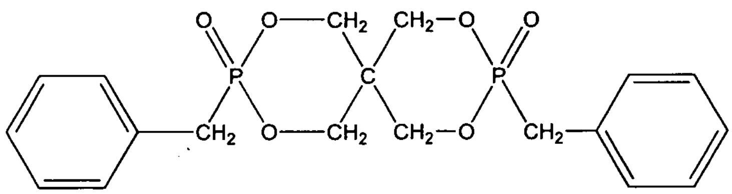

(2)

Then, the method for synthesizing the organophosphorus compound (component C) in the invention will be described. The organophosphorus compound of the component C may be the one produced by other methods than the method described below so long as it satisfies the specific characteristics of the invention.

The organophosphorus compound of the component C can be obtained in the following manner. For example, pentaerythritol is allowed to react with phosphorus trichloride. Subsequently, the oxidized reaction product is treated with an alkali metal compound such as sodium methoxide, and then, allowed to react with aralkyl halide.

Alternatively, the compound can be obtained by a method in which pentaerythritol is allowed to react with aralkyl phosphonic dichloride, or a method in which the compound obtained by allowing pentaerythritol to react with phosphorus trichloride is allowed to react with aralkyl alcohol, and then, Arbuzov transition is carried out at high temperatures. The latter reaction is disclosed in, for example, U.S. Pat. No. 3,141,032, JP-A-54-157156, and JP-A-53-39698.

The specific method for synthesizing the organophosphorus compound of the component C will be described below. However, this synthesis method is only for description. The organophosphorus compound of the component C for use in the invention may be the one synthesized by not only these synthesis methods, but also the modified and other synthesis methods. More specific synthesis methods will be described in the preparation examples described later.

(I) Method 1 for producing the organophosphorus compound of the item (2) in the component C;

The compound can be obtained in the following manner. Pentaerythritol is allowed to react with phosphorus trichloride, and then, the reaction product is oxidized by tertiary butanol. The oxidized reaction product is treated with sodium methoxide, and allowed to react with benzyl bromide.

(II) Method 2 for producing the organophosphorus compound of the item (2) in the component C;

The compound can be obtained in the following manner. Pentaerythritol is allowed to react with phosphorus trichloride, and the resulting reaction product is allowed to react with benzyl alcohol. The resulting phosphite compound is subjected to Arbuzov transition at high temperatures in the presence of benzyl bromide.

Further, the organophosphorus compound obtained by the production method of the item (I) or (II) is washed for satisfying the items (i) to (iii). As the washing process, a reflux washing process with methanol is adopted.

This washing process is a process in which an organophosphorus compound containing impurities and methanol are heated under reflux, and then cooled to room temperature for filtration. This washing process can remove the impurities and reduce the acid value more effectively than with repulp washing (washing with a solvent and filtration are repeated several times), and it is also advantageous in terms of cost.

Specific washing process is as follows. To every 100 parts of the crude product of pentaerythritol diphosphonate produced with the production method of the item (I) or (II), xylene is added in an amount of 100 to 500 parts. The mixture is stirred by means of a stirrer at 15 to 40°C for 0.5 to 3 hours, and then filtrated. To every 100 parts of the resulting filtrate, methanol is added in an amount of 100 to 500 parts, and the mixture is heated under reflux for 0.5 to 6 hours. At this step, the solid component is not required to be completely dissolved. The slurry after heating under reflux is cooled to room temperature, and filtrated. As a result, it is possible to obtain pentaerythritol diphosphonate having the objective characteristics.

The organophosphorus compound of the component C is added in an amount in the range of 1 to 100 parts by weight, preferably 1 to 50 parts by weight, more preferably 2 to 50 parts by weight, and in particular preferably 5 to 50 parts by weight per 100 parts by weight of the styrene type resin (component A).

The preferred range of the ratio of the component C to be added is determined by the desired flame retardancy level, the type of the resin component (component A), and the like. Further, use of other flame retarders, a flame retardant aid, and a fluorine-containing resin can also change the amount of the component C to be added. The ratio of the component C to be added can often be reduced.

The flame retardant styrene type resin composition of the invention is a composition substantially not containing halogen, and attains the flame retardancy of V-2 level or higher, excellent in thermal stability and hue.

The flame retardant styrene type resin composition of the invention is largely classified into two forms according to the presence or absence of the polyphenylene ether type resin (component B). The one type is a flame retardant styrene type resin composition (I) comprising a styrene type resin (component A), and an organophosphorus compound (component C) represented by the formula (1). The other type is a flame retardant styrene type resin composition (II) comprising a styrene type resin (component A), a polyphenylene ether type resin (component B), and an organophosphorus compound (component C) represented by the formula (1). The flame retardant styrene type resin compositions (I) and (II) in the invention will be shown as follows.

Flame retardant styrene type resin composition (I)

A flame retardant styrene type resin composition comprising (A) a styrene type resin (component A) in an amount of 100 parts by weight, and an organophosphorus compound (component C) represented by the following formula (1) in an amount of 1 to 100 parts by weight, characterized in that the organophosphorus compound (component C) satisfies:

(i) the weight loss residue on heating at 500°C is 10% or less;
(ii) the HPLC purity is 90% or more, and
(iii) the acid value is 0.5 mg KOH/g or less

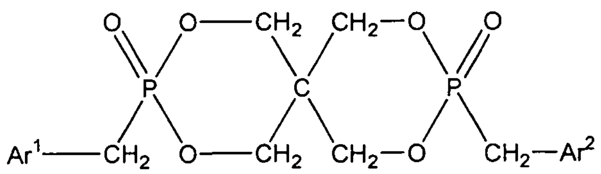

(1)

(where in the formula, $Ar^1$ and $Ar^2$ may be the same or different, and is a phenyl which may have a substituent.)

The flame retardant styrene type resin composition (I) of the invention is excellent in thermal stability, does not

have burn marks during molding, is good in hue, provides a molded product with no silver being formed thereon, and excellent in outward appearance, and also good in fluidity and heat resistance. Whereas, the flame retardancy is at least V-2, and preferably V-1 in terms of the flame retardancy level of the UL94 standard. Even when the compositions are at the same flame retardancy level of V-2, a difference is caused in flame retardancy therebetween according to the average burn time in seconds or the limited oxygen index (LOI). When the average burn time in seconds is small, the effect of preventing the spread of fire is high. With a test piece having a thickness of 1.6 mm, the average burn time in seconds is preferably 10 seconds or less, more preferably 8 seconds or less, and in particular preferably 6 seconds or less. Whereas, when LOI is 22.0 or more, the composition becomes less likely to burn in air, and favorably, it has a wider range of application.

The organophosphorus compound (component C) is preferably in an amount in the range of 2 to 50 parts by weight, and more preferably in an amount in the range of 3 to 30 parts by weight per 100 parts by weight of the styrene type resin component A).

Flame retardant styrene type resin composition (II)

A flame retardant styrene type resin composition comprising (A) a styrene type resin (component A) in an amount of 100 parts by weight, (B) a polyphenylene ether type resin (component B) in an amount of 1 to 100 parts by weight, and (C) an organophosphorus compound (component C) represented by the following formula (1) in an amount of 1 to 100 parts by weight, characterized in that the organophosphorus compound (component C) satisfies:

(i) the weight loss residue on heating at 500°C is 10% or less;
(ii) the HPLC purity is 90% or more, and
(iii) the acid value is 0.5 mg KOH/g or less

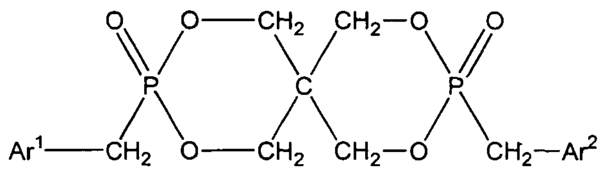

(1)

(where in the formula, Ar1 and Ar2 may be the same or different, and is a phenyl group which may have a substituent.)

The flame retardant styrene type resin composition (II) of the invention is excellent in thermal stability, does not have burn marks during molding, is good in hue, provides a molded product with no silver being formed thereon, and excellent in outward appearance, and also good in fluidity and heat resistance. Whereas, the flame retardancy is at least V-2, preferably at least V-1, and in particular preferably V-0 in terms of the flame retardancy level of the UL94 standard.

The polyphenylene ether type resin (component B) is preferably in an amount in the range of 1 to 50 parts by weight, more preferably in an amount in the range of 3 to 50 parts by weight, and in particular preferably in an amount in the range of 5 to 50 parts by weight per 100 parts by weight of the styrene type resin (component A).

The organophosphorus compound (component C) is preferably in an amount in the range of 1 to 50 parts by weight, more preferably in an amount in the range of 2 to 50 parts by weight, and in particular preferably in an amount in the range of 5 to 50 parts by weight per 100 parts by weight of the styrene type resin (component A).

Therefore, as the preferred compositions, mention may be made of a combination of 1 to 50 parts by weight of a polyphenylene ether type resin (component B) and 1 to 50 parts by weight of an organophosphorus compound (component C), preferably a combination of 3 to 50 parts by weight of a polyphenylene ether type resin (component B) and 2 to 50 parts by weight of an organophosphorus compound (component C), and in particular preferably a combination of 5 to 50 parts by weight of a polyphenylene ether type resin (component B) and 5 to 50 parts by weight of an organophosphorus compound (component C), per 100 parts by weight of a styrene type resin (component A).

Whereas, most preferred is a resin composition comprising, per 100 parts by weight of a styrene type resin (component A), (i) a polyphenylene ether type resin (component B) in an amount of 5 parts by weight or more, and (ii) an organophosphorus compound (component C) in an amount of 5 parts by weight or more, and (iii) the polyphenylene ether type resin and the organophosphorus compound being added in a total amount of 50 parts by weight or less. The resin composition within this range attains V-0 in terms of the flame retardancy level of the UL-94 standard.

In the flame retardant resin composition of the invention, other than the organophosphorus compound (component C), phosphorus or a phosphorous compound (component D) can be used in combination as another flame

retarder. As the components D, the following (D-1) to (D-5) can be exemplified.

(D-1); red phosphorus
(D-2); triaryl phosphate represented by the following general formula (D-2):

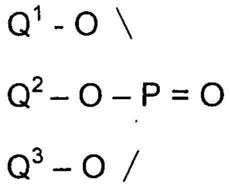

(D-2)

(D-3); condensed phosphoric acid ester represented by the following general formula (D-3):

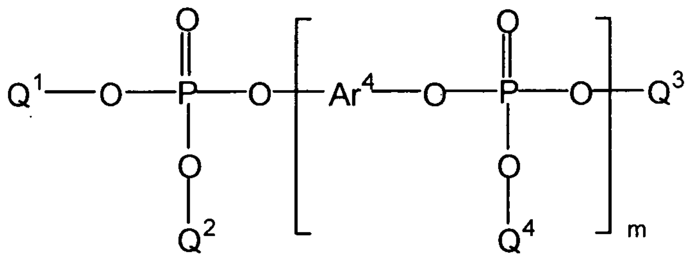

(D-3)

(D-4); condensed phosphoric acid ester represented by the following general formula (D-4):

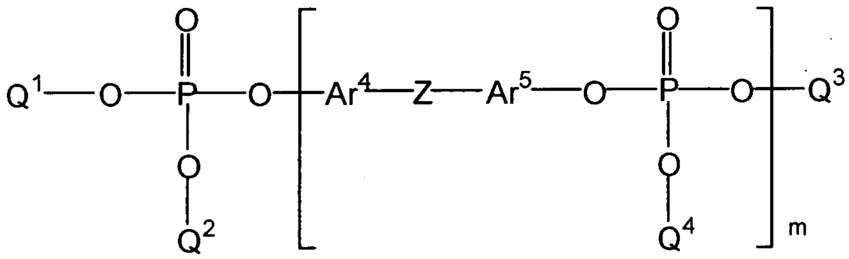

(D-4)

(D-5); organophosphorus compound represented by the following general formula (D-5):

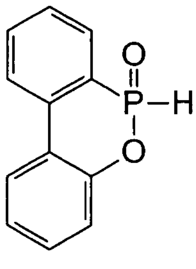

(D-5)

In the formulae (D-2) to (D-4), $Q^1$ to $Q^4$ may be each the same or different, and each are an aryl group having 6 to 15 carbon atoms, preferably an aryl group having 6 to 10 carbon atoms. Specific examples of the aryl group may include a phenyl group, a naphthyl group, or an anthryl group. The aryl group may have 1 to 5, and preferably 1 to 3 substituents. As the substituents, mention may be made of (i) alkyl groups having 1 to 12 carbon atoms, and preferably alkyl groups having 1 to 9 carbon atoms such as a methyl group, an ethyl group, a propyl group, an isopropyl group, a n-butyl group, a sec-butyl group, a tert-butyl group, a neopentyl group, and a nonyl group, (ii) alkyloxy groups having 1 to 12 carbon atoms, and preferably alkyloxy groups having 1 to 9 carbon atoms such as a methoxy group, an ethoxy group, a propoxy group, a butoxy group, and a pentoxy group, (iii) alkylthio groups having 1 to 12 carbon atoms, and

preferably alkylthio groups having 1 to 9 carbon atoms such as a methylthio group, an ethylthio group, a propylthio group, a butylthio group, and a pentylthio group, and (iv) groups represented by the formula $Ar^6$-$W^1$- (where $W^1$ represents -O-, -S-, or an alkylene group having 1 to 8 carbon atoms, and preferably 1 to 4 carbon atoms, and $Ar^6$ represents an aryl group having 6 to 15 carbon atoms, and preferably 6 to 10 carbon atoms).

In the formulae (D-3) and (D-4), $Ar^4$ and $Ar^5$ may be the same or different when both are present (in the case of D-4), and each represent an arylene group having 6 to 15 carbon atoms, and preferably an arylene group having 6 to 10 carbon atoms. Specific examples thereof may include a phenylene group or a naphthylene group. The arylene group may have 1 to 4, and preferably 1 to 2 substituents. As such substituents, mention may be made of (i) alkyl groups having 1 to 4 carbon atoms such as a methyl group, an ethyl group, a propyl group, an isopropyl group, a n-butyl group, a sec-butyl group, and a tert-butyl group, (ii) aralkyl groups having 7 to 20 carbon atoms such as a benzyl group, a phenethyl group, a phenylpropyl group, a naphthylmethyl group, and a cumyl group, (iii) groups represented by the formula $Q^5$-$W^2$- (where $W^2$ represents -O- or -S-, and $Q^5$ represents an alkyl group having' 1 to 4 carbon atoms, and preferably 1 to 3 carbon atoms, or an aryl group having 6 to 15 carbon atoms, and preferably 6 to 10 carbon atoms), and (iv) an aryl group having 6 to 15 carbon atoms, such as a phenyl group.

In the formulae (D-3) and (D-4), m represents an integer of 1 to 5, preferably an integer of 1 to 3, and in particular preferably 1.

In the formula (D-4), Z is a single bond or a group linking $Ar^4$ and $Ar^5$, and -$Ar^4$-Z-$Ar^5$- is generally a residue derived from bisphenol. Thus, Z represents a single bond, -O-, -CO-, -S-, -$SO_2$-, or an alkylene group having 1 to 3 carbon atoms, and preferably a single bond, -O-, or isopropylidene.

Even other phosphorus compounds than the phosphorus or the phosphorus compounds of the formulae (D-1) to (D-5) can be each used in combination with the component C.

When the phosphorus or the phosphorus compound (component D) of each of the formulae (D-1) to (D-5) is added in the resin composition, the ratio thereof properly falls within the range of preferably 1 to 100 parts by weight, more preferably 5 to 80 parts by weight, and in particular preferably 10 to 60 parts by weight per 100 parts by weight of the organophosphorus compound (component C). Out of the phosphorus and the phosphorus compounds of the foregoing formulae (D-1) to (D-5), the phosphorus compounds of (D-2) to (D-5) are preferred.

To the flame retardant resin composition of the invention, a biscumyl compound (component E) represented by the following formula can be further added.

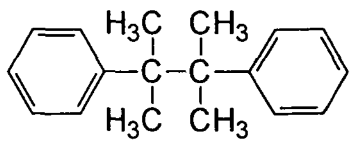

The aromatic ring of the biscumyl compound may have 1 to 5, and preferably 1 to 3 substituents. As the substituents, mention may be made of (i) alkyl groups having 1 to 12 carbon atoms, and preferably alkyl groups having 1 to 9 carbon atoms, such as a methyl group, an ethyl group, a propyl group, an isopropyl group, a n-butyl group, a sec-butyl group, a tert-butyl group, a neopentyl group, and a nonyl group, (ii) alkyloxy groups having 1 to 12 carbon atoms, and preferably alkyloxy groups having 1 to 9 carbon atoms, such as a methoxy group, an ethoxy group, a propoxy group, a butoxy group, and a pentoxy group, (iii) alkylthio groups having 1 to 12 carbon atoms, and preferably alkylthio groups having 1 to 9 carbon atoms, such as a methylthio group, an ethylthio group, a propylthio group, a butylthio group, and a pentylthio group, and (iv) groups represented by the formula $Ar^6$-$W^1$-(where $W^1$ represents -O-, -S-, or an alkylene group having 1 to 8 carbon atoms, and preferably 1 to 4 carbon atoms, and $Ar^6$ represents an aryl group having 6 to 15 carbon atoms, and preferably 6 to 10 carbon atoms).

When the biscumyl compound (component E) is added to the resin composition, it is added in a ratio of 0.01 to 3 parts by weight, preferably 0.02 to 2 parts by weight, and in particular preferably 0.03 to 1 parts by weight per 100 parts by weight of the styrene type resin (component A). The flame retardancy effect resulting from the addition of the biscumyl compound in this ratio is presumably due to the radical formation. Resultantly, the level of flame retardancy is improved.

To the flame retardant resin composition, a known flame retardant aid can be further added. Examples of the flame retardant aid may include silicone oil. Such silicone oils include polydiorganosiloxane as a skeleton, and are preferably polydiphenylsiloxane, polymethylphenylsiloxane, and polydimethylsiloxane, or a given copolymer or mixture thereof. Out of these, polydimethylsiloxane is preferably used. The viscosity is preferably 0.8 to 5,000 centipoises (25°C), more preferably 10 to 1,000 centipoises (25°C), and further preferably 50 to 500 centipoises (25°C), and the one with a viscosity within such a range is excellent in flame retardancy, and preferred. The amount of such silicone oil to be added is preferably in the range of 0.5 to 10 parts by weight per 100 parts by weight of the styrene type resin (component A).

Further, to the flame retardant resin composition of the invention, various flame retardant improvers can also be added. Examples of the flamer retardant improver which can be added to the flame retardant resin composition of the invention may include thermosetting resins such as phenol resins and epoxy resins.

Any phenol resins are acceptable for use as flame retardant improvers so long as they are polymers each having a plurality of phenolic hydroxyl groups. Examples thereof may include novolak type, resol type, and thermal reaction type resins, or modified resins thereof. These may be uncured resins to which a curing agent has not yet been added, semicured resins, or cured resins. Out of these, phenol novolak resins to which a curing agent has not yet been added, and which is nonreactive are preferred in terms of flame retardancy, impact resistance, and cost efficiency. Further, the shape has no particular restriction, and any of the crushed product, granular, flaky, powdery, needle-like, liquid, and other forms is usable. The phenol resins may be used, if required, singly, or in mixture of two or more thereof.

The phenol resin has no particular restriction, and commonly and commercially available ones are usable. For example, a novolak type phenol resin can be obtained in the following manner. Phenols and aldehydes are charged in a reaction vessel in a mole ratio of 1 : 0.7 to 1 : 0.9. Further, a catalyst such as oxalic acid, hydrochloric acid, sulfuric acid, or toluene sulfonic acid is added, and then heating and reaction under reflux are carried out. Vacuum dehydration or stationary dehydration is carried out for removing the resulting water, and further, the residual water and unreacted phenols are removed. For these resins, a plurality of raw material components are used, so that a co-condensed phenol resin can be obtained. This can be also used similarly.

Whereas, a resol type phenol resin can be obtained in the following manner. Phenols and aldehydes are charged in a reaction vessel in a mole ratio of 1 :1 to 1 : 2. Further, a catalyst such as sodium hydroxide, aqueous ammonia, or other basic substance is added. Then, the same operation as with the novolak type phenol resin is carried out.

Herein as the phenols, mention may be made of phenol, o-cresol, m-cresol, p-cresol, thymol, p-tert-butylphenol, tert-butylcatechol, catechol, isoeugenol, o-methoxyphenol, 4,4'-dihydroxyphenylpropane, isoamyl salicylate, benzyl salicylate, methyl salicylate, 2,6-di-tert-butyl-p- cresol, and the like. These phenols can be used, if required, singly, or in mixture of two or more thereof. On the other hand, as aldehydes, mention may be made of formaldehyde, paraformaldehyde, polyoxymethylene, trioxane, and the like. These aldehydes can also be used, if required, singly, or in mixture of two or more thereof.

The molecular weight of the phenol resin also has no particular restriction. However, the phenol resin with a number-average molecular weight in the range of preferably 200 to 2,000, and further preferably 400 to 1,500 is excellent in mechanical physical properties, molding processability, and cost efficiency, and hence it is preferred.

Examples of the epoxy resin for use as a flame retardant improver may include a bisphenol A type epoxy resin, a bisphenol F type epoxy resin, a bisphenol AD type epoxy resin, a bisphenol S type epoxy resin, a phenol novolak type epoxy resin, a cresol novolak type epoxy resin, a naphthalene type epoxy resin, and a biphenol type epoxy resin. However, these are not particularly exclusive. These epoxy resins are not limited to only one thereof for use, and can be used in combination of two or more thereof, or in various modified forms.

When the flame retardancy improving resin is added, the ratio thereof is 0.01 to 45 parts by weight, preferably 0.1 to 40 parts by weight, and in particular preferably 0.5 to 35 parts by weight per 100 parts by weight of the component A.

To the flame retardant resin composition of the invention, a fluorine-containing resin can be further added as a dropping inhibitor. The addition of the fluorine-containing resin improves the flame retardancy of the molded product. Particularly, the molded product is inhibited from dropping in the burning test.

The fluorine-containing resin for use as a dropping inhibitor has no particular restriction so long as it has a fibril-forming ability. Examples thereof may include homopolymers or copolymers of fluorine-containing monomers such as tetrafluoroethylene, trifluoroethylene, vinyl fluoride, vinylidene fluoride, and hexafluoropropylene. Particularly, polytetrafluoroethylene having a fibril-forming ability is preferred. As the polytetrafluoroethylene having a fibril-forming ability, mention may be made of a powder (so-called polytetrafluoroethylene fine powder, classified as a type 3 in the ASTM standard) obtained by coagulating and drying the latex resulting from emulsion polymerization of tetrafluoroethylene. Alternatively, mention may be made of an aqueous dispersion (so-called polytetrafluoroethylene dispersion) produced by adding a surfactant to the latex for concentration and stabilization.

The molecular weight of such polytetrafluoroethylene having a fibril-forming ability is 1,000,000 to 10,000,000, and more preferably 2,000,000 to 9,000,000 in terms of the number-average molecular weight determined from the standard specific gravity.

Further, such polytetrafluoroethylene having a fibril-forming ability has a primary particle diameter in the range of preferably 0.05 to 1.0 $\mu$m, and more preferably 0.1 to 0.5 $\mu$m. When it is used in the form of a fine powder, the one with a secondary particle diameter of 1 to 1,000 $\mu$m is usable, and further preferably, the one of 10 to 500 $\mu$m can be used.

Such polytetrafluoroethylene has a melt dropping preventing performance at the time of the burning test of a test piece in the vertical burning test of the UL standard. Specific examples of such polytetrafluoroethylene having a fibril-forming ability may include Teflon 6J and Teflon 30J manufactured by DU PONT-MITSUI FLUOROCHEMICALS COMPANY, Ltd., POLYFLON MPA FA-500, POLYFLON F-201L, and POLYFLON D-1 manufactured by DAIKIN INDUSTRIES Ltd., and CD076 manufactured by Asahi ICI Fluoropolymers Co., Ltd.

For such polytetrafluoroethylene in the form of a fine powder, the one subjected to various treatments for preventing secondary coagulation is more preferably used. As such a treatment, mention may be made of a burning treatment of the surface of polytetrafluoroethylene. Alternatively, as such a treatment, mention may be made of coating of the surface of the polytetrafluoroethylene having a fibril-forming ability with polytetrafluoroethylene having no fibril-forming ability. More preferred in the invention is the polytetrafluoroethylene subjected to the latter treatment. This is because the objective fibril-forming ability tends to be reduced in the former case. The polytetrafluoroethylene having a fibril-forming ability in such a case is preferably in an amount in the range of 70 to 95% by weight based on the total amount. Whereas, the polytetrafluoroethylene having no fibril-forming ability is 10,000 to 1,000,000, and more preferably 10,000 to 800,000 in terms of the number-average molecular weight determined from the standard specific gravity.

For such polytetrafluoroethylene (which may be hereinafter referred to as PTFE), other than the one in a solid form as described above, the one in an aqueous dispersion form is also usable.

For such polytetrafluoroethylene, other than in a general solid form, the ones in aqueous emulsion and dispersion forms are also usable. However, the dispersant component tends to adversely affect the moisture and heat resistance, and hence, particularly, the one in a solid form can be preferably used.

Whereas, for such polytetrafluoroethylene having a fibril-forming ability, in order to improve the dispersibility in a resin, and obtain further favorable outward appearance and mechanical characteristics, mention may be made of a coagulated mixture of an emulsion of polytetrafluoroethylene and an emulsion of a vinyl type polymer as a preferred form.

Herein, as the vinyl type polymers, mention may be made of polypropylene, polyethylene, polystyrene, HIPS, AS resin, ABS resin, MBS resin, MABS resin, AAS resin, polymethyl (meth)acrylate, a block copolymer made of styrene and butadiene, and a hydrogenated copolymer thereof, a block copolymer made of styrene and isoprene, and a hydrogenated copolymer thereof, an acrylonitrile - butadiene copolymer, ethylene - propylene random copolymer and block copolymer, ethylene - butene random copolymer and block copolymer, a copolymer of ethylene and $\alpha$-olefin, an ethylene - unsaturated carboxylic acid ester copolymer such as ethylene-butyl acrylate, an acrylic acid ester - butadiene copolymer such as butyl acrylate - butadiene, a gum polymer such as polyalkyl (meth)acrylate, a composite gum including polyorganosiloxane and polyalkyl (meth)acrylate, further, a copolymer obtained by grafting a vinyl type monomer such as styrene, acrylonitrile, or polyalkyl methacrylate to such a composite gum, and the like.

In order to prepare such a coagulated mixture, an aqueous emulsion of the vinyl type polymer having an average particle size of 0.01 to 1 $\mu$m, and particularly 0.05 to 0.5 $\mu$m is mixed with an aqueous emulsion of polytetrafluoroethylene having an average particle size of 0.05 to 10 $\mu$m, and particularly 0.05 to 1.0 $\mu$m. Such polytetrafluoroethylene emulsion can be obtained by polymerizing polytetrafluoroethylene with emulsion polymerization using a fluorine-containing surfactant. Incidentally, in such emulsion polymerization, it is also possible to copolymerize another copolymer component such as hexafluoropropylene in an amount of 10% by weight or less based on the total amount of polytetrafluoroethylene.

Incidentally, for obtaining such a coagulated mixture, a proper polytetrafluoroethylene emulsion having a solid content of generally 40 to 70% by weight, and particularly 50 to 65% by weight, and a vinyl type polymer emulsion having a solid content of 25 to 60% by weight, and particularly 30 to 45% by weight are used. Further, the ratio of polytetrafluoroethylene in the coagulated mixture preferably used is 1 to 80% by weight, and particularly 1 to 60% by weight per a total of 100% by weight of it and the vinyl type polymer for use in the coagulated mixture. The following production method can be preferably mentioned. The emulsions are mixed, and then, stirred and mixed. The mixture is charged in hot water including metal salts such as calcium chloride and magnesium sulfate dissolved therein, and salted out and coagulated, thereby to be separated and recovered. Alternatively, mention may also be made of a method for recovering the stirred mixed emulsion by a process of spray drying, freeze drying, or the like.

Whereas, the coagulated mixture of an emulsion of a polytetrafluoroethylene having a fibril-forming ability and an emulsion of a vinyl type polymer can be used in various forms. Examples thereof may include a form in which a vinyl type polymer surrounds the polytetrafluoroethylene particle, a form in which polytetrafluoroethylene surrounds a vinyl type polymer, and a form in which several particles are coagulated for one particle.

Further, also usable is the one configured such that to the further external layer of the coagulated mixture, the same or another type vinyl type polymer is graft polymerized. As such vinyl type monomers, mention may be preferably made of styrene, $\alpha$-methylstyrene, methyl methacrylate, cyclohexyl acrylate, dodecyl methacrylate, dodecyl acrylate, acrylonitrile, and 2-ethylhexyl acrylate. These can be used singly, or copolymerized.

Typical examples of the commercially available product of the coagulated mixture of an emulsion of polytetrafluoroethylene having a fibril-forming ability and an emulsion of a vinyl type polymer may include METABLEN "A3000" from MITSUBISHI RAYON Co., Ltd., and "BLENDEX 449" from GE SPECIALITY CHEMICALS INC.

When a fluorine-containing resin is added, the ratio thereof is preferably 0.01 to 10 parts by weight, and more preferably 0.1 to 5 parts by weight per 100 parts by weight of the component A. When the ratio is 0.01 part by weight or more, a sufficient melt dropping preventing performance tends to be obtained. When the ratio is 10 parts by weight or less, defective outward appearance and insufficient dispersion become less likely to occur, and further, economical advantage is produced. Therefore, the ratio within this range is preferable.

To the flame retardant resin composition of the invention, various additives, for example, deterioration inhibitors

such as a flame retardant aid, an antioxidant, an ultraviolet absorber, and a light resistant stabilizer, a lubricant, an antistatic agent, a mold release agent, a plasticizer, reinforcing fibers such as glass fiber and carbon fiber, fillers such as talk, mica, and wollastonite, and a coloring agent such as pigment may be added. The amount of the additives to be added can be appropriately selected according to the type and the intended object of the additive in such a range as not to impair the heat resistance, the impact resistance, the mechanical strength, and the like.

The flame retardant resin composition of the invention may be prepared in the form of a composition obtained by premixing components A to C, and if required, other components by means of a mixer such as a V type blender, a supermixer, a super floater, or a Henschel mixer. However, generally, it may be often a mixture obtained by uniformly melt mixing the premixture. Such a mixture can be obtained by melt kneading the premixture by means of a kneading means at a temperature of, for example, about 200°C to 300°C, and preferably 210°C to 280°C, and pelletizing it. As the kneading means, various melt mixers such as a kneader, and uniaxial or biaxial extruder can be used. However, in many cases, the resin composition is molten by means of a biaxial extruder or the like, and a liquid component is injected thereto by a side feeder. Thus, the mixture is extruded, and pelletized by means of a pelletizer.

The flame retardant resin composition of the invention is useful as a material to be molded in various molded products such as office automation equipment components, home appliance components, and automobile components. Such a molded product can be manufactured by a conventional method as follows. For example, a pelletlike flame retardant resin composition is injection molded at a cylinder temperature of, for example, about 200 to 280°C by means of an injection molding machine.

[Examples]

Below, the invention will be described by way of examples. However, the scope of the invention is not limited to these examples. Incidentally, evaluations were carried out in the following manner.

(1) Colorability of resin composition

For extruding and kneading a resin composition, RTC-30 manufactured by TIOXIDE was added as a coloring agent in an amount of 0.5 part by weight per 100 parts by weight of the resin component to injection mold an angle plate (50 mm long x 50 mm wide x 5 mm thick) of the resulting resin composition. During injection molding, the resin composition was retained in a cylinder for 10 minutes, and then, the hue of the angle plate obtained at the third shot was subjected to a reflection measurement by means of a spectrophotometer SE-2000 manufactured by Nippon Denshoku Industries Co., Ltd. Thus, the evaluation of the colorability was carried out by the ΔE from the composition including no phosphorus compound added therein. The evaluation was carried out according to the following criteria.

The one with a ΔE of less than 1.0: AA
The one with a ΔE of 1.0 or more: CC

(2) Hue of molded product

From the pellet obtained from extrusion kneading, a sample plate (a plate in stepped form with overall dimensions of 90 mm high x 50 mm wide, in which the 20-mm long portion has a thickness of 3 mm, the 45-mm long portion has a thickness of 2 mm, and the 25-mm long portion has a thickness of 1 mm) was injection molded. The hue thereof was visually evaluated. The evaluation was carried out according to the following criteria.

Good in hue: AA

The one on which burn marks are slightly observed: BB

The one on which burn marks are observed: CC

(3) Outward appearance of molded product (presence or absence of silver)

From the pellet obtained from extrusion kneading, a sample plate was injection molded. Thus, the molded product was visually evaluated for the outward appearance according to the presence or absence of silver. The evaluation was carried out according to the following criteria.

No silver: AA
The one on which silver is slightly observed: BB

The one on which silver is observed: CC

(4) Mold staining property

The mold staining after molding of the resin composition into various sample plates had been carried out 500 shots was visually evaluated. The evaluation was carried out according to the following criteria.

No mold staining: AA
Slight mold staining: BB
Much mold staining: CC

(5) Heat resistance (heat distortion temperature; HDT)

The heat distortion temperature (HDT) was measured under a load of 18.5 kg using a 6.35-mm (1/4-inch) test piece by the method according to ASTM-D648. Whereas, the heat distortion temperature retention (M) was calculated from the calculation equation: M = (y/x) x 100 (%), where x is the heat distortion temperature (°C) of the molded product from the used base resin (the component A or a mixture of the component A and the component B), and y is the heat distortion temperature (°C) of the molded product from the flame retardant resin composition (a mixture of the base resin and the component C), the temperatures x and y having been obtained by measurements.

(6) Fluidity (MVR)

The measurement was carried out according to ISO-1133. The measurement was carried out under the conditions of 230°C and a load of 3.8 kg.

(7) Flame retardancy (UL-94 evaluation)

The flame retardancy was evaluated using test pieces with thicknesses of 3.2 mm (1/8 inch) and 1.6 mm (1/16 inch), according to the vertical burning test specified in UL-94 of the Unites States UL standard as the scale for evaluation of the flame retardancy. The UL standard and the total burning time in seconds are shown in Tables.

For the UL-94 vertical burning test, 5 test pieces are tested in one group. For every test piece, 10-second flaming is repeated twice. This, however, does not apply to a test piece which entirely burns upon first flaming. After the first flaming, the burning time after removing the flame was measured. After flame extinguishment, second flaming is carried out. After the second flaming, the burning time after removing the flame is measured. In the test of a group of five pieces, a total of 10 burning times can be measured. When in any burning time, the flame is extinguished in 10 seconds, the sum of a total of 10 burning times is within 50 seconds, and the droppings do not cause cotton ignition, the result is rated as V-0; when in any burning time, the flame is extinguished in 30 seconds, the sum of a total of 10 burning times is within 250 seconds, and the droppings do not cause cotton ignition, the result is rated as V-1; when in any burning time, the flame is extinguished in 30 seconds, the sum of a total of 10 burning times is within 250 seconds, and the droppings cause cotton ignition, the result is rated as V-2; and the result not greater than the criteria is rated as not V.

(8) Flame retardancy (limited oxygen index; LOI evaluation)

The evaluation was carried out according to the burning test method of a polymer material with the JIS-K-7201 oxygen index method.

(9) Reduced viscosity ηsp/C

To 1 g of a rubber-modified styrene type resin, a mixed solvent of 18 ml of methyl ethyl ketone and 2 ml of methanol was added. The mixture was shaken at 25°C for 2 hours, and centrifuged at 4000 rpm for 30 minutes. The supernatant liquid was collected, and a resin component was precipitated with methanol, and then dried. 0.1 g of the resin thus obtained was dissolved in toluene, resulting in a 0.5 g/dl solution. 10 ml of this solution was charged in an Ostwald type viscometer with a capillary diameter of about 0.3 mm, and the falling time in second $t_1$ of the solution was measured at 30°C. On the other hand, the falling time in second to of toluene was measured by means of the same viscometer. Then, calculation was carried out by the following mathematical expression. At this step, the falling time in second to of toluene is preferably 240 seconds or more.

$$\eta sp/C = (t1/t0-1)/C \text{ (C: polymer concentration g/dl)}$$

(10) Amount of rubber like polymer in rubber-modified styrene type resin

By means of a nuclear magnetic resonance measuring apparatus (UNITY 300, manufactured by Varian), the nuclear magnetic resonance of hydrogen atom was measured, and the amount of the rubber like polymer component was calculated from the molar ratio of styrene units and butadiene units.

(11) Acid value of phosphorus compound

The measurement was carried out according to JIS-K-3504.

(12) HPLC purity of phosphorus compound

A sample was dissolved in a mixed solution of acetonitrile and water in a ratio of 6.5 : 3.5 (by volume), and 5 μl thereof was injected into a column. As the column, Develosil ODS-7 300 mm x 4 mm dia manufactured by Nomura Chemical Co., Ltd., was used, and the column temperature was set at 40°C. The detector used was UV-260 nm.

(13) $^{31}$P NMR purity of phosphorus compound

By means of a nuclear magnetic resonance measuring apparatus (JNM-AL400, manufactured by JEOL), the nuclear magnetic resonance of phosphorus atom was measured (DMSO-$d_6$, 162 MHz, number of integrations 3072), and the integrated area ratio was taken as the $^{31}$P NMR of the phosphorus compound.

Incidentally, for the $^{31}$P NMR chart, the following magnification regions were magnified to identify the impurities. As the magnification, longitudinally, the main peak was magnified until the top of the main peak comes to the position of the upper end of the computer screen, and further magnified so that the height 1/200 times the height of the main peak on the screen was at the position of the upper end of the computer screen. Transversely, the following respective magnification regions were magnified to the maximum width on the computer screen. When magnification is insufficient, impurities cannot be identified, so that the apparent $^{31}$P NMR may be improved.

Magnification region 1: 219 ppm to 216 ppm
Magnification region 2: 180 ppm to 177 ppm
Magnification region 3: 149 ppm to 145 ppm
Magnification region 4: 124 ppm to 121 ppm
Magnification region 5: 93 ppm to 90 ppm
Magnification region 6: 27 ppm to 23 ppm
Magnification region 7: 23 ppm to 18 ppm
Magnification region 8: 9 ppm to -4 ppm
Magnification region 9: -6 ppm to -15 ppm

(14) Weight loss residue on heating

The measurement was carried out by means of a thermal gravimetric balance test (TGA method). By means of an apparatus for thermogravimetry TGA-50 manufactured by SHIMADZU CORPORATION, the temperature was raised at 10°C/min under a nitrogen flow, and the residual amount (%) at 500°C was taken as the weight loss residue on heating.

Preparation Example 1

Preparation of 2,4,8,10-tetraoxa-3,9-diphosphaspiro [5.5] undecane,3, 9-dibenzyl-3, 9-dioxide (FR-1)

Into a reactor equipped with a thermometer, a condenser, and a dropping funnel, 816.9 g (6.0 mol) of pentaerythritol, 19.0 g (0.24 mol) of pyridine, and 2250.4 g (24.4 mol) of toluene were charged and stirred. To the reactor, 1651.8 g (12.0 mol) of phosphorus trichloride was added using the dropping funnel. After the completion of the addition, heating and stirring were carried out at 60°C. After the reaction, the mixture was cooled down to room temperature. To the resulting reactant, 26.50 parts of methylene chloride was added, and with ice cooling, 889.4 g (12.0 mol) of tertiary

butanol and 150.2 g (1.77 mol) of methylene chloride were added dropwise thereto. The resulting crystal was washed with toluene and methylene chloride, and filtrated. The resulting filtrate was dried at 80°C and 1.33 × $10^2$ Pa for 12 hours, thereby to obtain 1341.1 g (5.88 mol) of a white solid. The resulting solid was identified to be 2,4,8,10-tetraoxa-3,9-diphosphaspiro[5.5]undecane,3,9-dihydro-3,9-dioxide by $^{31}$P, $^{1}$H NMR spectrum.

Into a reactor equipped with a thermometer, a condenser, and a dropping funnel, 1341.0 g (5.88 mol) of the resulting 2,4,8,10-tetraoxa-3,9-diphosphaspiro [5.5] undecane,3, 9-dihydro-3, 9-dioxide, and 6534.2 g (89.39 mol) of DMF were charged and stirred. To the reactor, under ice cooling, 648.7 g (12.01 mol) of sodium methoxide was added. The mixture was stirred under ice cooling for 2 hours, and then, stirred at room temperature for 5 hours. Further, after distilling away DMF, 2613.7 g (35.76 mol) of DMF was added. To the reaction mixture, 2037.79 g (11.91 mol) of benzyl bromide was added dropwise under ice cooling. After stirring under ice cooling for 3 hours, DMF was distilled away, and 8 L of water was added thereto. Then, the precipitated solid was collected by filtration, and washed with 2 L of water twice. The resulting crude purified product and 4 L of methanol were charged in a reactor equipped with a condenser and a stirrer, and refluxed for about 2 hours. After cooling the mixture down to room temperature, the crystal was separated by filtration, and washed with 2 L of methanol. Then, the resulting filtrate was dried at 120°C and 1.33 × $10^2$ Pa for 19 hours, thereby to obtain 1863.5 g (4.56 mol) of a white flaky crystal. The resulting crystal was identified to be 2,4,8,10-tetraoxa-3,9-diphosphaspiro[5.5]undecane,3,9-dibenzyl-3,9-dioxide by $^{31}$P, $^{1}$H NMR spectrum and elementary analysis. The yield was'76%; the weight loss residue on heating, 0.85% (see, FIG. 1); the acid value, 0.06 mg KOH/g; the HPLC purity, 99%; and the $^{31}$P NMR purity, 99%.
$^{1}$H-NMR (DMSO-$d_6$, 400 MHz): δ 7.2 - 7.4 (m, 10H), 4.1 - 4.5 (m, 8H), 3.5 (d, 4H), $^{31}$P-NMR (DMSO-$d_6$, 162 MHz): δ 21.0 (S), melting point: 255 - 256°C, elementary analysis calculated values: C, 55.89; H, 5.43, measured values: C, 56.24; H, 5.35

Preparation Example 2

Preparation of 2,4,8,10-tetraoxa-3,9-diphosphaspiro[5.5]undecane,3,9-dibenzyl-3,9-dioxide (FR-2)

Into a reactor equipped with a stirrer, a thermometer, and a condenser, 22.55 g (0.055 mol) of 3,9-dibenzyloxy-2,4,8,10-tetraoxa-3,9-diphosphaspiro[5.5]undecane, 19.01 g (0.11 mol) of benzyl bromide, and 33.54 g (0.32 mol) of xylene were filled, and dry nitrogen was flown with stirring under room temperature. Then, heating was started in an oil bath, and heating and stirring were carried out at a reflux temperature (about 130°C) for 4 hours. After the completion of heating, the mixture was allowed to cool down to room temperature, and 20 mL of xylene was added thereto, and the mixture was stirred for another 30 minutes. The precipitated crystal was separated by filtration, and washed with 20 mL of xylene twice. The resulting crude purified product and 100 mL of methanol were charged in a reactor equipped with a condenser and a stirrer, and refluxed for about 2 hours. After cooling the mixture down to room temperature, the crystal was separated by filtration, and washed with 20 mL of methanol. Then, the resulting filtrate was dried at 120°C and 1.33 x $10^2$ Pa for 19 hours, thereby to obtain a white flaky crystal. The product was identified to be bisbenzyl pentaerythritol diphosphonate by mass spectrometry, $^{1}$H, $^{31}$P nuclear magnetic resonance spectrometry, and elementary analysis. The yield was 20.60 g; the yield, 91%; the weight loss residue on heating, 0.46% (see, FIG. 2); the acid value, 0.05 mg KOH/g; the HPLC purity, 99%; and the $^{31}$P NMR purity, 99%.
$^{1}$H-NMR (DMSO-$d_6$, 400 MHz) : δ 7.2 - 7.4 (m, 10H), 4.1 - 4.5 (m, 8H), 3.5 (d, 4H), $^{31}$P-NMR (DMSO-$d_6$, 162 MHz): δ 21.0 (S), melting point: 257°C

Preparation Example 3

Preparation of 2,4,8,10-tetraoxa-3,9-diphosphaspiro[5.5]undecane,3,9-dibenzyl-3,9-dioxide (FR-3)

Into a reactor equipped with a stirrer, a thermometer, and a condenser, 22.55 g (0.055 mol) of 3,9-dibenzyloxy-2,4,8,10-tetraoxa-3,9-diphosphaspiro [5.5] undecane, 19.01 g (0.11 mol) of benzyl bromide, and 33.54 g (0.32 mol) of xylene were filled, and dry nitrogen was flown with stirring under room temperature. Then, heating was started in an oil bath, and heating and stirring were carried out at a reflux temperature (about 130°C) for 4 hours. After the completion of heating, the mixture was allowed to cool down to room temperature, and 20 mL of xylene was added thereto, and the mixture was stirred for another 30 minutes. The precipitated crystal was separated by filtration, and the resulting filtrate was vacuum dried at 100°C and 1.33 x $10^2$ Pa. The resulting white solid was identified to be 2,4,8,10-tetraoxa-3,9-diphosphaspiro[5.5]undecane,3,9-dibenzyl-3,9-dioxide by $^{1}$H, $^{31}$P-NMR. The weight loss residue on heating was 10.1%; the acid value, 2.5 mg KOH/g; the HPLC purity, 84%; and the $^{31}$P NMR purity, 85%.

As the respective components for use in Examples and Comparative Examples, the following ones were used.

(a) Styrene type resin (component A)

(1) Commercially available high impact polystyrene (STYRON 492R manufactured by A & M Styrene; reduced viscosity ηsp/C (0.5 g/dl, toluene solution, measured at 30°C) is 0.96 dl/g, and the rubber like polymer is in an amount of 6.5% by weight) was used (which is hereinafter referred to as HIPS-1).
(2) Commercially available high impact polystyrene (STYRON H9152 manufactured by A & M Styrene; reduced viscosity ηsp/C (0.5 g/dl, toluene solution, measured at 30°C) is 0.82 dl/g, and the rubber like polymer is in an amount of 6.1% by weight) was used (which is hereinafter referred to as HIPS-2).
(3) Commercially available high impact polystyrene (STYRON 433 manufactured by A & M Styrene; reduced viscosity ηsp/C (0.5 g/dl, toluene solution, measured at 30°C) is 0.78 dl/g, and the rubber like polymer is in an amount of 5.2% by weight) was used (which is hereinafter referred to as HIPS-3).

(b) Polyphenylene ether type resin (component B)

Commercially available polyphenylene ether (Xyron manufactured by Asahi Kasei Corporation) was used (which is hereinafter referred to as PPE).

(c) Organophosphorus compound (component C)

(1) 2,4,8,10-Tetraoxa-3,9-diphosphaspiro[5.5] undecane,3,9-dibenzyl-3,9-dioxide synthesized in Preparation Example 1

An organophosphorus type compound represented by the general formula (4) (which is hereinafter referred to as FR-1)

(2) 2,4,8,10-Tetraoxa-3,9-diphosphaspiro[5.5]undecane,3,9-dibenzyl-3,9-dioxide synthesized in Preparation Example 2

An organophosphorus type compound represented by the general formula (4) (which is hereinafter referred to as FR-2)

(3) 2,4,8,10-Tetraoxa-3,9-diphosphaspiro[5.5]undecane,3,9-dibenzyl-3,9-dioxide synthesized in Preparation Example 3

An organophosphorus type compound represented by the general formula (4) (which is hereinafter referred to as FR-3)

(d) Other organophosphorus compounds (component D)

(1) Triphenyl phosphate

Commercially available aromatic phosphoric acid ester (TPP manufactured by Daihachi Chemical Industry Co., Ltd.) was used (which is hereinafter referred to as FR-4).

(2) 1,3-Phenylenebis[di(2,6-dimethylphenyl) phosphate]

An organic phosphoric acid ester compound of the general formula (D-3), where $Ar^4$ is a phenylene group, $Q^1$, $Q^2$, $Q^3$, and $Q^4$ are each a 2,6-dimethylphenyl group, and m is 1, a commercially available aromatic phosphoric acid ester (Adekastab FP-500 manufactured by Asahi Denka Kogyo Co., Ltd.) was used (which is hereinafter referred to as FR-5).

(3) Resorcinol bis(diphenyl phosphate)

An organic phosphoric acid ester compound of the general formula (D-3), where $Ar^4$ is a phenylene group, $Q^1$, $Q^2$, $Q^3$, and $Q^4$ are each a phenyl group, and m is 0, 1, or 2 (m = 1 for the main component), a commercially available aromatic phosphoric acid ester (CR-733S manufactured by Daihachi Chemical Industry Co., Ltd.) was used (which is hereinafter referred to as FR-6).

(4) Bisphenol A bis(diphenyl phosphate)

An organic phosphoric acid ester compound of the general formula (D-4), where $Ar^4$-Z-$Ar^5$ is bisphenol A, $Q^1$, $Q^2$, $Q^3$, and $Q^4$ are each a phenyl group, and m is 1, a commercially available aromatic phosphoric acid ester (CR-741 manufactured by Daihachi Chemical Industry Co., Ltd.) was used (which is hereinafter referred to as FR-7).

[Examples 1 to 41 and Comparative Examples 1 to 42]

Respective components shown in Tables 1 to 6 were mixed in amounts (parts by weight) shown in Tables 1 to 6 by means of a tumbler, and the mixture was pelletized at a cylinder temperature of 220°C by means of a 15-mm dia biaxial extruder (KZW15 manufactured by Technovel Corporation). Each resulting pellet was dried by means of a 70°C hot air dryer for 4 hours. The pellet was molded into each test piece at a molding temperature of 210°C and a mold temperature of 40°C by means of an injection molding machine (J75Si, manufactured by the Japan Steel Works Ltd.). The results of evaluations using the test pieces are shown in Tables 1 to 7.

Table 1

| | | Unit | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| Composition | Component A | Type | HIPS-1 | HIPS-1 | HIPS-2 | HIPS-2 | HIPS-2 | HIPS-3 | HIPS-3 | HIPS-3 | HIPS-2 | HIPS-2 | HIPS-3 | HIPS-3 |
| | | Parts by weight | 100 | 100 | 100 | 100 | 100 | 100 | 100 | 100 | 100 | 100 | 100 | 100 |
| | Component B | Parts by weight | - | - | - | - | - | - | - | - | - | - | - | - |
| | Component C | Type | FR-1 | FR-1 | FR-1 | FR-1 | FR-1 | FR-1 | FR-1 | FR-1 | FR-2 | FR-2 | FR-2 | FR-2 |
| | | Parts by weight | 15 | 25 | 10 | 15 | 20 | 5 | 10 | 15 | 10 | 15 | 5 | 10 |
| | Component D | Type | - | - | - | - | - | - | - | - | - | - | - | - |
| | | Parts by weight | - | - | - | - | - | - | - | - | - | - | - | - |
| Flame retardancy | UL-94 | 3.2 mm | V-2 | V-2 | - | V-2 | V-2 | V-2 | V-2 | V-2 | - | V-2 | V-2 | V-2 |
| | | Average time in seconds | 14.5 | 11.6 | - | 10.0 | 7.5 | 13.2 | 9.7 | 7.3 | - | 10.2 | 12.8 | 10.1 |
| | | 1.6 mm | V-2 | V-2 | V-2 | V-2 | V-2 | V-2 | V-2 | V-2 | V-2 | V-2 | V-2 | V-2 |
| | | Average time in seconds | 9.8 | 7.2 | 9.2 | 5.7 | 4.2 | 5.3 | 4.4 | 3.8 | 9.4 | 5.3 | 5.2 | 4.6 |
| | LOI | % | 22.0 | 22.7 | 22.2 | 22.5 | 22.5 | 20.5 | 21.5 | 22.2 | 21.5 | 22.0 | 20.0 | 21.2 |
| Various physical properties | HDT | °C | 81 | 82 | 80 | 80 | 81 | 71 | 71 | 72 | 80 | 80 | 71 | 71 |
| | Retention | % | 103 | 104 | 100 | 100 | 101 | 100 | 100 | 101 | 100 | 100 | 100 | 100 |
| | MVR | $cm^3$/10 min | 13.4 | 13.5 | 23.3 | 22.7 | 24.1 | 65.1 | 64.8 | 63.0 | 22.8 | 23.2 | 65.2 | 64.7 |
| | Colorability | Evaluation | AA | AA | AA | AA | AA | AA | AA | AA | AA | AA | AA | AA |
| | Hue | Evaluation | AA | AA | AA | AA | AA | AA | AA | AA | AA | AA | AA | AA |
| | Outward appearance | Evaluation | AA | AA | AA | AA | AA | AA | AA | AA | AA | AA | AA | AA |
| | Mold staining property | Evaluation | AA | AA | AA | AA | AA | AA | AA | AA | AA | AA | AA | AA |

Table 2

| | | Unit | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| Composition | Component A | Type | HIPS-2 | HIPS-2 | HIPS-2 | HIPS-2 | HIPS-2 | HIPS-2 | HIPS-3 | HIPS-3 | HIPS-3 | HIPS-3 | HIPS-3 | HIPS-3 |
| | | Parts by weight | 100 | 100 | 100 | 100 | 100 | 100 | 100 | 100 | 100 | 100 | 100 | 100 |
| | Component B | Parts by weight | - | - | - | - | - | - | - | - | - | - | - | - |
| | Component C | Type | FR-1 | FR-1 | FR-1 | FR-1 | FR-2 | FR-2 | FR-1 | FR-1 | FR-1 | FR-1 | FR-2 | FR-2 |
| | | Parts by weight | 8 | 10 | 8 | 10 | 8 | 8 | 4 | 8 | 4 | 8 | 4 | 4 |
| | Component D | Type | FR-6 | FR-6 | FR-7 | FR-7 | FR-6 | FR-7 | FR-6 | FR-6 | FR-7 | FR-7 | FR-6 | FR-7 |
| | | Parts by weight | 3 | 4 | 3 | 4 | 3 | 3 | 1 | 2 | 1 | 2 | 1 | 1 |
| Flame retardancy | UL-94 | 3.2 mm | V-2 | V-2 | V-2 | V-2 | V-2 | V-2 | V-2 | V-2 | V-2 | V-2 | V-2 | V-2 |
| | | Average time in seconds | 12.5 | 10.7 | 13.6 | 11.1 | 12.3 | 13.2 | 13.5 | 10.1 | 13.7 | 10.5 | 13.1 | 14.1 |
| | | 1.6 mm | V-2 | V-2 | V-2 | V-2 | V-2 | V-2 | V-2 | V-2 | V-2 | V-2 | V-2 | V-2 |
| | | Average time in seconds | 10.1 | 6.8 | 10.8 | 7.2 | 9.8 | 10.4 | 5.7 | 4.3 | 5.4 | 4.8 | 5.8 | 5.6 |
| | LOI | % | 22.0 | 22.3 | 22.2 | 22.5 | 22.0 | 22.2 | 20.5 | 21.2 | 20.3 | 21.3 | 20.3 | 20.2 |
| Various physical properties | HDT | °C | 77 | 75 | 78 | 76 | 77 | 78 | 69 | 68 | 68 | 69 | 69 | 69 |
| | Retention | % | 96 | 94 | 98 | 95 | 96 | 98 | 97 | 96 | 96 | 97 | 97 | 97 |
| | MVR | $cm^3/10$ min | 29.8 | 30.6 | 27.4 | 29.3 | 29.7 | 27.5 | 70.4 | 72.3 | 69.1 | 71.2 | 70.8 | 69.5 |
| | Colorability | Evaluation | AA | AA | AA | AA | AA | AA | AA | AA | AA | AA | AA | AA |
| | Hue | Evaluation | AA | AA | AA | AA | AA | AA | AA | AA | AA | AA | AA | AA |
| | Outward appearance | Evaluation | AA | AA | AA | AA | AA | AA | AA | AA | AA | AA | AA | AA |
| | Mold staining property | Evaluation | AA | AA | AA | AA | AA | AA | AA | AA | AA | AA | AA | AA |

Table 3

| | | Unit | Example 25 | Example 26 | Example 27 | Example 28 | Example 29 | Example 30 | Example 31 | Example 32 |
|---|---|---|---|---|---|---|---|---|---|---|
| Composition | Component A | Type | HIPS-2 | HIPS-2 | HIPS-2 | HIPS-2 | HIPS-2 | HIPS-2 | HIPS-2 | HIPS-2 |
| | | Parts by weight | 90 | 80 | 80 | 80 | 70 | 70 | 70 | 70 |
| | Component B | Parts by weight | 10 | 20 | 20 | 20 | 30 | 30 | 30 | 30 |
| | Component C | Type | FR-1 | FR-1 | FR-1 | FR-1 | FR-1 | FR-1 | FR-1 | FR-1 |
| | | Parts by weight | 25 | 10 | 15 | 20 | 5 | 10 | 15 | 20 |
| | Component D | Type | - | - | - | - | - | - | - | - |
| | | Parts by weight | - | - | - | - | - | - | - | - |
| Flame retardancy | UL-94 | 3.2 mm | V-0 | V-1 | V-0 | V-0 | V-1 | V-1 | V-0 | V-0 |
| | | Average time in seconds | 3.5 | 10.2 | 4.7 | 3.5 | 12.0 | 8.6 | 4.4 | 3.1 |
| | | 1.6 mm | - | - | - | - | - | - | - | - |
| | | Average time in seconds | - | - | - | - | - | - | - | - |
| | LOI | % | 25.2 | 26.8 | 28.0 | 28.0 | 27.0 | 28.0 | 28.3 | 28.5 |
| Various physical properties | HDT | °C | 88 | 91 | 91 | 90 | 99 | 98 | 99 | 100 |
| | Retention | % | 99 | 99 | 99 | 98 | 100 | 99 | 100 | 101 |
| | MVR | $cm^3/10$ min | 11.9 | 9.6 | 10.1 | 10.5 | 6.1 | 6.3 | 7.2 | 7.8 |
| | Colorability | ΔE | AA | AA | AA | AA | AA | AA | AA | AA |
| | Hue | Evaluation | AA | AA | AA | AA | AA | AA | AA | AA |
| | Outward appearance | Evaluation | AA | AA | AA | AA | AA | AA | AA | AA |
| | Mold staining property | Evaluation | AA | AA | AA | AA | AA | AA | AA | AA |

Table 4

| | | Unit | Example 33 | Example 34 | Example 35 | Example 36 | Example 37 | Example 38 | Example 39 | Example 40 | Example 41 |
|---|---|---|---|---|---|---|---|---|---|---|---|
| Composition | Component A | Type | HIPS-2 | HIPS-2 | HIPS-2 | HIPS-2 | HIPS-2 | HIPS-2 | HIPS-2 | HIPS-2 | HIPS-2 |
| | | Parts by weight | 100 | 100 | 100 | 100 | 100 | 100 | 100 | 100 | 100 |
| | Component B | Parts by weight | 10 | 10 | 15 | 15 | 20 | 10 | 10 | 15 | 15 |
| | Component C | Type | FR-1 | FR-1 | FR-1 | FR-1 | FR-1 | FR-2 | FR-2 | FR-2 | FR-2 |
| | | Parts by weight | 25 | 30 | 20 | 30 | 15 | 25 | 30 | 20 | 30 |
| | Component D | Type | - | - | - | - | - | - | - | - | |
| | | Parts by weight | - | - | - | - | - | - | - | - | |
| Flame retardancy | UL-94 | 3.2 mm | V-0 | V-0 | V-0 | V-0 | V-0 | V-0 | V-0 | V-0 | V-0 |
| | | Average time in seconds | 4.5 | 4.3 | 3.5 | 3.2 | 3.6 | 4.4 | 4.3 | 3.2 | 3.1 |
| | | 1.6 mm | V-0 | V-0 | V-0 | V-0 | V-0 | V-0 | V-0 | V-0 | V-0 |
| | | Average time in seconds | 4.8 | 4.6 | 3.8 | 3.6 | 3.8 | 4.7 | 4.7 | 3.7 | 3.7 |
| | LOI | % | 24.7 | 24.8 | 25.0 | 25.5 | 25.2 | 24.7 | 25.0 | 24.8 | 25.3 |
| Various physical properties | HDT | °C | 89 | 87 | 86 | 88 | 87 | 86 | 82 | 84 | 86 |
| | Retention | % | 107 | 105 | 101 | 104 | 99 | 104 | 99 | 99 | 101 |
| | MVR | $cm^3/10$ min | 12.3 | 12.0 | 9.8 | 10.0 | 10.3 | 12.5 | 13.1 | 11.3 | 13.4 |
| | Colorability | $\Delta E$ | AA | AA | AA | AA | AA | AA | AA | AA | AA |
| | Hue | Evaluation | AA | AA | AA | AA | AA | AA | AA | AA | AA |
| | Outward appearance | Evaluation | AA | AA | AA | AA | AA | AA | AA | AA | AA |
| | Mold staining property | Evaluation | AA | AA | AA | AA | AA | AA | AA | AA | AA |

Table 5

| | | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|---|---|---|---|
| Composition | Component A | Type | HIPS-1 | HIPS-2 | HIPS-3 | HIPS-2 | HIPS-2 | HIPS-2 | HIPS-2 | HIPS-2 | HIPS-2 | HIPS-1 | HIPS-1 | HIPS-1 | HIPS-1 | HIPS-1 |
| | | Parts by weight | 100 | 100 | 100 | 100 | 100 | 100 | 90 | 80 | 70 | 100 | 100 | 100 | 100 | 100 |
| | Component B | Parts by weight | - | - | - | 10 | 15 | 20 | 10 | 20 | 30 | - | - | - | | |
| | Component C | Type | - | - | - | - | - | - | - | - | - | - | - | - | - | FR-3 |
| | | Parts by weight | - | - | - | - | - | - | - | - | - | - | - | - | - | 15 |
| | Component D | Type | - | - | - | - | - | - | - | - | - | FR-4 | FR-4 | FR-5 | FR-5 | - |
| | | Parts by weight | - | - | - | - | - | - | - | - | - | 15 | 25 | 15 | 25 | - |
| Flame retardancy | UL-94 | 3.2 mm | notV | notV | notV - | notV | notV | notV | notV | notV | notV - | V-2 | V-2 | notV | V-2 | notV |
| | | Average time in seconds | - | - | - | - | - | - | - | - | - | 16.3 | 14.8 | - | 15.3 | - |
| | | 1.6 mm | notV | notV | notV - | notV | notV | notV | notV | notV | notV - | V-2 | V-2 | V-2 | V-2 | V-2 |
| | | Average time in seconds | - | - | - | - | - | - | - | - | - | 10.5 | 8.4 | 12.4 | 10.6 | 13.5 |
| | LOI | % | 19.5 | 19.5 | 19.0 | 20.5 | 20.8 | 20.8 | 20.6 | 21.2 | 21.5 | 20.3 | 20.8 | 20.7 | 21.3 | 21.3 |
| Various physical properties | HDT | °C | 79 | 80 | 71 | 83 | 85 | 88 | 89 | 92 | 99 | 57 | 54 | 65 | 63 | 73 |
| | Retention | % | - | - | - | - | - | - | - | - | - | 72 | 68 | 82 | 80 | 92 |
| | MVR | $cm^3/10$ min | 7.9 | 16.5 | 71.9 | 11.7 | 9.8 | 9.5 | 11.5 | 8.2 | 5.8 | 51.0 | 60.2 | 30.9 | 53.8 | 21.6 |
| | Colorability | $\Delta E$ | - | - | - | - | - | - | - | - | - | CC | CC | AA | CC | CC |
| | Hue | Evaluation | AA | AA | AA | AA | AA | AA | AA | AA | AA | BB | BB | AA | BB | CC |
| | Outward appearance | Evaluation | AA | AA | AA | AA | AA | AA | AA | AA | AA | BB | CC | BB | CC | BB |
| | Mold staining property | Evaluation | AA | AA | AA | AA | AA | AA | AA | AA | AA | CC | CC | BB | CC | BB |

Table 6

| | | Unit | Comparative Example 15 | Comparative Example 16 | Comparative Example 17 | Comparative Example 18 | Comparative Example 19 | Comparative Example 20 | Comparative Example 21 | Comparative Example 22 | Comparative Example 23 | Comparative Example 24 | Comparative Example 25 | Comparative Example 26 | Comparative Example 27 | Comparative Example 28 |
|---|---|---|---|---|---|---|---|---|---|---|---|---|---|---|---|---|
| Composition | Component A | Type | HIPS-1 | HIPS-2 | HIPS-2 | HIPS-2 | HIPS-2 | HIPS-2 | HIPS-2 | HIPS-2 | HIPS-2 | HIPS-2 | HIPS-3 | HIPS-3 | HIPS-3 | HIPS-3 |
| | | Parts by weight | 100 | 100 | 100 | 100 | 100 | 100 | 100 | 100 | 100 | 100 | 100 | 100 | 100 | 100 |
| | Component B | Parts by weight | - | - | - | - | - | - | - | - | - | - | - | - | | |
| | Component C | Type | FR-3 | - | - | - | - | - | - | FR-3 | FR-3 | FR-3 | - | - | - | - |
| | | Parts by weight | 25 | - | - | - | - | - | - | 10 | 15 | 20 | - | - | - | - |
| | Component D | Type | - | FR-4 | FR-4 | FR-4 | FR-5 | FR-5 | FR-5 | - | - | - | FR-4 | FR-4 | FR-4 | FR-5 |
| | | Parts by weight | - | 10 | 15 | 20 | 10 | 15 | 20 | - | - | - | 5 | 10 | 15 | 5 |
| Flame retardancy | UL-94 | 3.2 mm | V-2 | V-2 | V-2 | V-2 | notV | V-2 | V-2 | notV | V-2 | V-2 | V-2 | V-2 | V-2 | V-2 |
| | | Average time in seconds | 15.7 | 17.1 | 15.8 | 13.6 | - | 17.4 | 15.9 | - | 19.6 | 16.2 | 10.5 | 10.2 | 9.8 | 13.1 |
| | | 1.6 mm | V-2 | V-2 | V-2 | V-2 | V-2 | V-2 | V-2 | notV | V -2 | V-2 | V-2 | V-2 | V-2 | V-2 |
| | | Average time in seconds | 11.6 | 11.4 | 9.8 | 10.5 | 13.6 | 11.8 | 10.7 | - | 14.2 | 10.3 | 9.2 | 9.0 | 8.7 | 10.8 |
| | LOI | % | 21.5 | 21.2 | 21.3 | 21.5 | 21.3 | 21.3 | 21.7 | 21.2 | 21.3 | 21.5 | 19.8 | 20.0 | 20.3 | 20.0 |
| Various physical properties | HDT | °C | 71 | 67 | 65 | 62 | 68 | 66 | 64 | 72 | 71 | 73 | 55 | 57 | 54 | 64 |
| | Retention | % | 90 | 84 | 81 | 78 | 85 | 83 | 80 | 90 | 89 | 91 | 78 | 80 | 76 | 90 |
| | MVR | $cm^3/10$ min | 22.8 | 55.0 | 68.3 | Immeasurable | 45.2 | 61.3 | Immeasurable | 25.6 | 26.4 | 26.7 | 96.1 | Immeasurable | Immeasurable | 80.3 |
| | Colorability | ΔE | CC | AA | CC | CC | AA | AA | CC | CC | CC | CC | AA | AA | CC | AA |
| | Hue | Evaluation | CC | AA | BB | BB | AA | AA | BB | BB | CC | CC | AA | AA | BB | AA |
| | Outward appearance | Evaluation | CC | BB | BB | CC | AA | BB | BB | BB | BB | CC | AA | AA | BB | AA |
| | Mold staining property | Evaluation | BB | BB | CC | CC | BB | BB | CC | BB | BB | BB | BB | CC | CC | BB |

Table 7

| | | Unit | Comparative Example 29 | Comparative Example 30 | Comparative Example 31 | Comparative Example 32 | Comparative Example 33 |
|---|---|---|---|---|---|---|---|
| Composition | Component A | Type | HIPS-3 | HIPS-3 | HIPS-3 | HIPS-3 | HIPS-3 |
| | | Parts by weight | 100 | 100 | 100 | 100 | 100 |
| | Component B | Parts by weight | - | - | - | - | - |
| | Component C | Type | - | - | FR-3 | FR-3 | FR-3 |
| | | Parts by weight | - | - | 5 | 10 | 15 |
| | Component D | Type | FR-5 | FR-5 | - | - | - |
| | | Parts by weight | 10 | 15 | - | - | - |
| Flame retardancy | UL-94 | 3.2 mm | V-2 | V-2 | V-2 | V-2 | V-2 |
| | | Average time in seconds | 11.6 | 9.9 | 15.3 | 13.1 | 12.4 |
| | | 1.6 mm | V-2 | V-2 | V-2 | V-2 | V-2 |
| | | Average time in seconds | 10.1 | 8.8 | 6.7 | 5.4 | 4.7 |
| | LOI | % | 20.8 | 21.2 | 20.3 | 20.7 | 20.7 |
| Various physical properties | HDT | °C | 61 | 59 | 66 | 65 | 63 |
| | Retention | % | 86 | 83 | 93 | 92 | 89 |
| | MVR | $cm^3$/10 min | 97.3 | Immeasurable | 65.2 | 65.8 | 66.4 |
| | Colorability | $\Delta E$ | AA | AA | CC | CC | CC |
| | Hue | Evaluation | AA | AA | BB | BB | CC |
| | Outward appearance | Evaluation | AA | BB | AA | BB | BB |
| | Mold staining property | Evaluation | BB | BB | AA | BB | BB |

Table 8

| | | Unit | Comparative Example 34 | Comparative Example 35 | Comparative Example 36 | Comparative Example 37 | Comparative Example 38 | Comparative Example 39 | Comparative Example 40 | Comparative Example 41 | Comparative Example 42 |
|---|---|---|---|---|---|---|---|---|---|---|---|
| Composition | Component A | Type | HIPS-2 | HIPS-2 | HIPS-2 | HIPS-2 | HIPS-2 | HIPS-2 | HIPS-2 | HIPS-2 | HIPS-2 |
| | | Parts by weight | 100 | 100 | 100 | 100 | 100 | 100 | 100 | 100 | 100 |
| | Component B | Parts by weight | 10 | 15 | 20 | 10 | 10 | 15 | 15 | 20 | 20 |
| | Component C | Type | FR-3 | FR-3 | FR-3 | - | - | - | - | - | - |
| | | Parts by weight | 30 | 30 | 15 | - | - | - | - | - | - |
| | Component D | Type | - | - | - | FR-4 | FR-5 | FR-4 | FR-5 | FR-4 | FR-5 |
| | | Parts by weight | - | - | - | 30 | 30 | 30 | 30 | 15 | 15 |
| Flame retardancy | UL-94 | 3.2 mm | V-2 | V-2 | V-2 | V-2 | V-2 | V-2 | V-2 | V-2 | V-2 |
| | | Average time in seconds | 15.5 | 17.4 | 18.2 | 15.4 | 16.1 | 16.3 | 17.3 | 14.4 | 15.6 |
| | | 1.6 mm | V-2 | V-2 | V-2 | V-2 | V-2 | V-2 | V-2 | V-2 | V-2 |
| | | Average time in seconds | 12.3 | 13.8 | 14.6 | 10.1 | 11.8 | 12.3 | 13.4 | 9.6 | 10.3 |
| | LOI | % | 23.5 | 24.2 | 24.0 | 22.8 | 22.5 | 23.2 | 23.5 | 22.7 | 23.2 |
| Various physical properties | HDT | °C | 74 | 76 | 82 | 58 | 61 | 59 | 63 | 70 | 74 |
| | Retention | % | 89 | 89 | 93 | 70 | 73 | 69 | 74 | 80 | 84 |
| | MVR | $cm^3/10$ min | 14.8 | 11.5 | 11.2 | 80.4 | 85.2 | 77.1 | 71.9 | 60.3 | 51.2 |
| | Colorability | ΔE | CC | CC | CC | CC | CC | CC | CC | CC | AA |
| | Hue | Evaluation | CC | CC | CC | BB | AA | BB | AA | BB | AA |
| | Outward appearance | Evaluation | CC | CC | BB | BB | AA | BB | AA | BB | AA |
| | Mold staining property | Evaluation | BB | BB | BB | CC | BB | CC | BB | CC | BB |

The flame retardant resin composition of the invention and a molded product formed therefrom provide the following advantages as compared with a conventional flame retardant styrene type resin composition.

(i) Due to the characteristics of the organophosphorus compound for use as a flame retarder, the thermal deterioration of a styrene type resin is hardly caused during molding of the styrene type resin, or during use of the molded product. Thus, a resin composition excellent in thermal stability is provided. Further, a molded product free from burn marks

or silver and excellent in outward appearance can be provided. Therefore, a composition excellent in all of thermal stability, outward appearance, hue, fluidity, heat resistance, and flame retardancy in a well balanced manner can be provided.
There can be provided a styrene type resin composition having industrially useful flame retardancy, heat resistance, fluidity, and mechanical physical properties substantially without using a halogen-containing flame retarder.
(ii) The organophosphorus compound as a flame retarder has an excellent flame retardancy effect on a styrene type resin, and hence even a relatively small amount of the compound used attains the V-2 level. Further, a composition having the flame retardancy effect of the V-0 level can also be obtained with ease. Namely, in order to attain the objective flame retardancy level, a large amount of the compound added and the addition of the component are not required. A relatively simple composition provides a composition of the objective flame retardancy level.
(iii) There is provided a material which substantially does not contain halogen, and is molded into various molded products such as office automation equipment components, home appliance components, electrical / electronic components, and automobile components.

## Claims

**1.** A flame retardant styrene type resin composition comprising (A) a styrene type resin (component A) in an amount of 100 parts by weight, (B) a polyphenylene ether type resin (component B) in an amount of 0 to 100 parts by weight, and (C) an organophosphorus compound (component C) represented by the following formula (1) in an amount of 1 to 100 parts by weight, **characterized in that** the organophosphorus compound (component C) satisfies:

(i) the weight loss residue on heating at 500°C is 10% or less;
(ii) the HPLC purity is 90% or more, and
(iii) the acid value is 0.5 mg KOH/g or less

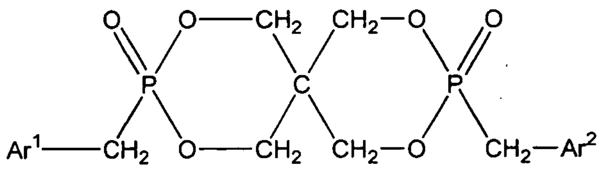

(1)

(where in the formula, $Ar^1$ and $Ar^2$ may be the same or different, and is a phenyl group which may have a substituent.)

**2.** The flame retardant styrene type resin composition according to claim 1, wherein the organophosphorus compound of the component C is an organophosphorus compound represented by the following formula (2).

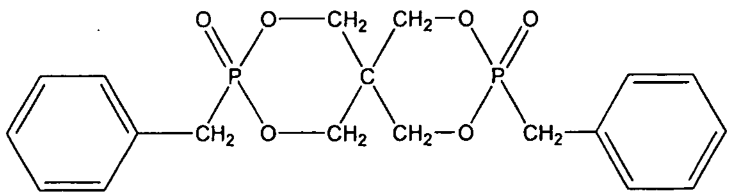

(2)

**3.** The flame retardant styrene type resin composition according to claim 1, wherein the styrene type resin of the component A is a rubber-modified styrene type resin.

**4.** The flame retardant styrene type resin composition according to claim 1, wherein the styrene type resin of the component A is a high impact polystyrene (HIPS).

**5.** The flame retardant styrene type resin composition according to claim 1, wherein the styrene type resin of the component A is a rubber-modified styrene type resin of which the reduced viscosity ηsp/C measured with the method described in the description is 0.2 to 1.5 dl/g, and of which the rubber like polymer component content measured

with the method described in the description is 1 to 50% by weight.

6. The flame retardant styrene type resin composition according to claim 1, wherein the component B is in an amount of 1 to 100 parts by weight per 100 parts by weight of the component A.

7. The flame retardant styrene type resin composition according to claim 1, wherein the weight loss residue on heating at 500°C of the organophosphorus compound of the component C is 8% or less.

8. The flame retardant styrene type resin composition according to claim 1, wherein the HPLC purity of the organophosphorus compound of the component C is 95% or more.

9. The flame retardant styrene type resin composition according to claim 1, wherein the acid value of the organophosphorus compound of the component C is 0.4 mg KOH/g or less.

10. The flame retardant styrene type resin composition according to claim 1, wherein the component C is in a ratio of 2 to 50 parts by weight per 100 parts by weight of the component A.

11. The flame retardant styrene type resin composition according to claim 1, capable of attaining at least V-2 in the flame retardancy level of the UL-94 standard, and an average burn time in seconds of 10 seconds or less, and an limited oxygen index (LOI) of 22.0 or more when the flame retardancy level is V-2 in the form of a 1.6-mm thick test piece.

12. The flame retardant styrene type resin composition according to claim 1, capable of attaining at least V-0 in the flame retardancy level of the UL-94 standard.

13. The flame retardant styrene type resin composition according to claim 1, substantially not containing halogen.

14. A flame retardant styrene type resin composition comprising (A) a styrene type resin (component A) in an amount of 100 parts by weight, and (C) an organophosphorus compound (component C) represented by the following formula (1) in an amount of 1 to 100 parts by weight, **characterized in that** the organophosphorus compound (component C) satisfies:

(i) the weight loss residue on heating at 500°C is 10% or less;
(ii) the HPLC purity is 90% or more, and
(iii) the acid value is 0.5 mg KOH/g or less

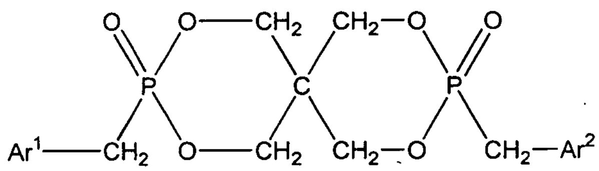

(1)

(where in the formula, $Ar^1$ and $Ar^2$ may be the same or different, and is a phenyl group which may have a substituent.)

15. A flame retardant styrene type resin composition comprising (A) a styrene type resin (component A) in an amount of 100 parts by weight, (B) a polyphenylene ether type resin (component B) in an amount of 1 to 100 parts by weight, and (C) an organophosphorus compound (component C) represented by the following formula (1) in an amount of 1 to 100 parts by weight, **characterized in that** the organophosphorus compound (component C) satisfies:

(i) the weight loss residue on heating at 500°C is 10% or less;
(ii) the HPLC purity is 90% or more, and
(iii) the acid value is 0.5 mg KOH/g or less

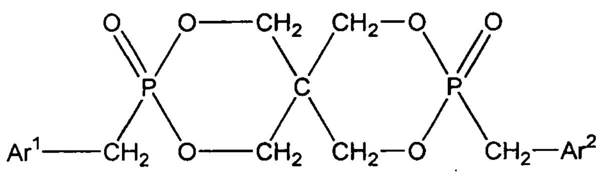

(1)

(where in the formula, $Ar^1$ and $Ar^2$ may be the same or different, and is a phenyl group which may have a substituent.)

**16.** A flame retardant styrene type resin composition comprising (A) a styrene type resin (component A), (B) a polyphenylene ether type resin (component B), and (C) an organophosphorus compound (component C) represented by the following formula (1), **characterized in that** per 100 parts by weight of the styrene type rein (component A), (i) the polyphenylene ether type resin (component B) is in an amount of 5 parts by weight or more, (ii) the organophosphorus compound (component C) is in an amount of 5 parts by weight or more, and (iii) the polyphenylene ether type resin and the organophosphorus compound are in a total amount of 50 parts by weight or less, and
the organophosphorus compound (component C) satisfies:

(i) the weight loss residue on heating at 500°C is 10% or less;
(ii) the HPLC purity is 90% or more, and
(iii) the acid value is 0.5 mg KOH/g or less

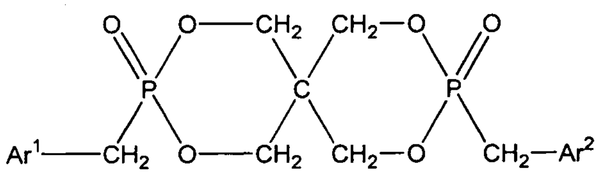

(1)

(where in the formula, $Ar^1$ and $Ar^2$ may be the same or different, and is a phenyl group which may have a substituent.)

**17.** A molded product formed by the flame retardant resin composition according to claim 1.

Fig. 1

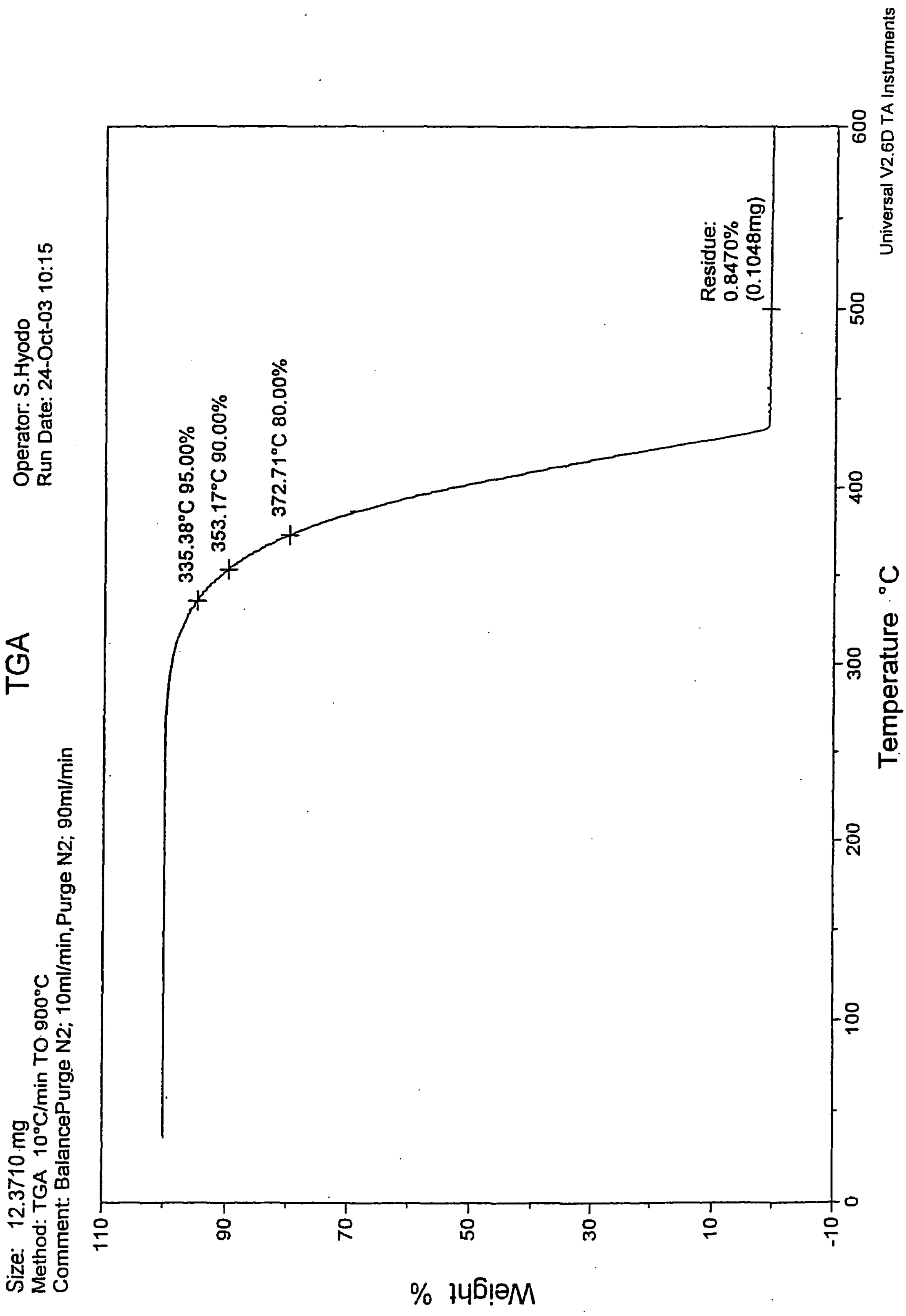
Size: 12.3710 mg
Method: TGA 10°C/min TO 900°C
Comment: BalancePurge N2; 10ml/min,Purge N2; 90ml/min
TGA
Operator: S.Hyodo
Run Date: 24-Oct-03 10:15
335.38°C 95.00%
353.17°C 90.00%
372.71°C 80.00%
Residue:
0.8470%
(0.1048mg)
Weight %
Temperature °C
Universal V2.6D TA Instruments
110
90
70
50
30
10
-10
0
100
200
300
400
500
600

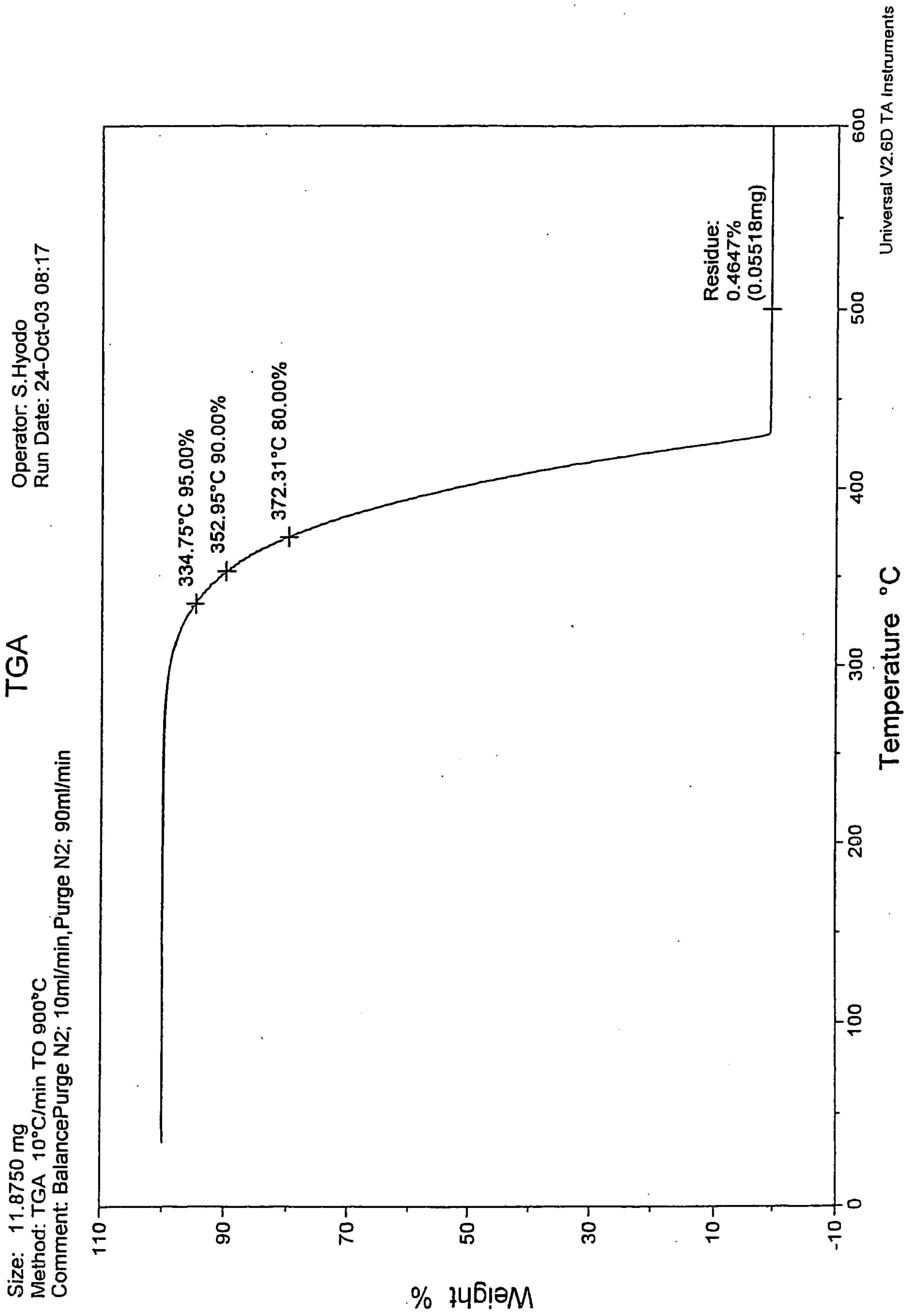
Size: 11.8750 mg
Method: TGA 10°C/min TO 900°C
Comment: BalancePurge N2; 10ml/min,Purge N2; 90ml/min
TGA
Operator: S.Hyodo
Run Date: 24-Oct-03 08:17
334.75°C 95.00%
352.95°C 90.00%
372.31°C 80.00%
Residue:
0.4647%
(0.05518mg)
Weight %
110
90
70
50
30
10
-10
0
100
200
300
400
500
600
Temperature °C
Universal V2.6D TA Instruments

Fig. 2

## INTERNATIONAL SEARCH REPORT

International application No.
PCT/JP03/15799

**A. CLASSIFICATION OF SUBJECT MATTER**
Int.Cl$^7$ C08L25/06, 71/12, C08K5/5357, C09K21/12//C07F9/6574

According to International Patent Classification (IPC) or to both national classification and IPC

**B. FIELDS SEARCHED**

Minimum documentation searched (classification system followed by classification symbols)
Int.Cl$^7$ C08L1/00-101/16

Documentation searched other than minimum documentation to the extent that such documents are included in the fields searched

Electronic data base consulted during the international search (name of data base and, where practicable, search terms used)
CAPlus(STN), WPI/L

**C. DOCUMENTS CONSIDERED TO BE RELEVANT**

| Category* | Citation of document, with indication, where appropriate, of the relevant passages | Relevant to claim No. |
|---|---|---|
| Y | US 4162278 A (AMERICAN CYANAMID CO.), 24 July, 1979 (24.07.79), Claims; examples & JP 54-143460 A Claims; examples & DE 2916972 A1 | 1-13,15-17 |
| Y | JP 2002-003727 A (Teijin Kasei Kabushiki Kaisha), 09 January, 2002 (09.01.02), Claims; Par. No. [0021] (Family: none) | 1-17 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 March, 2004 (15.03.04) | 30 March, 2004 (30.03.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.
PCT/JP03/15799

C (Continuation). DOCUMENTS CONSIDERED TO BE RELEVANT

| Category* | Citation of document, with indication, where appropriate, of the relevant passages | Relevant to claim No. |
|---|---|---|
| Y | US 3839506 A (BORG WARNER CORP.), 01 October, 1974 (01.10.74), Claims; page 2, right column, line 69 to page 3, left column, line 26 & JP 50-068978 A Claims; page 17, upper right column, line 3 to lower right column, line 17 & DE 2418390 A1 & FR 2268800 A & GB 1439092 A | 1,3-17 |
| Y | WO 02/092690 A1 (TEIJIN KASEI LTD.), 21 November, 2002 (21.11.02), Claims & JP 2003-213109 A Claims | 1-17 |
| Y | JP 2001-002945 A (Asahi Chemical Industry Co., Ltd.), 09 January, 2001 (09.01.01), Claims (Family: none) | 1-17 |

Form PCT/ISA/210 (continuation of second sheet) (July 1998)